# EUROPEAN PATENT SPECIFICATION

(11) **EP 3 494 747 B1**
(45) Date of publication and mention of the grant of the patent: **24.02.2021**
(21) Application number: 18770548.8
(22) Date of filing: 05.03.2018
(51) Int. Cl.: H04W 72/04, H04L 5/26, H04L 5/00

(54) **SYSTEM AND METHOD FOR SIGNALING FOR RESOURCE ALLOCATION FOR ONE OR MORE NUMEROLOGIES**
SIGNALISIERUNGSSYSTEM UND -VERFAHREN ZUR RESSOURCENZUWEISUNG FÜR EINE ODER MEHRERE NUMEROLOGIEN
SYSTÈME ET PROCÉDÉ DE SIGNALISATION POUR L'ATTRIBUTION DE RESSOURCES POUR UNE OU PLUSIEURS NUMÉROLOGIES

(30) Priority: 23.03.2017 US 201762475858 P; 04.04.2017 US 201762481668 P; 09.01.2018 US 201815866299
(43) Date of publication of application: 12.06.2019
(73) Proprietor: Huawei Technologies Co., Ltd., Longgang District Shenzhen, Guangdong 518129 (CN)
(72) Inventor: ISLAM, Toufiqul, Ottawa Ontario K2B 7T4 (CA); AU, Kelvin Kar Kin, Kanata Ontario K2M 0A2 (CA); TANG, Zhenfei, Ottawa Ontario K2K 0G4 (CA)
(74) Representative: Maiwald Patent- und Rechtsanwaltsgesellschaft mbH
(86) International application number: PCT/CN2018/078045
(87) International publication number: WO 2018/171413

(56) References cited:
- EP-A1- 3 142 283
- WO-A1-2015/169037
- WO-A1-2017/028889
- CN-A- 105 122 861
- US-A1- 2013 114 532
- US-A1- 2015 063 259

## Description

### TECHNICAL FIELD

The present invention relates generally to a system and method for wireless communications, and, in particular embodiments, to a system and method for signaling of resource allocation for one or more numerologies.

### BACKGROUND

In wireless communication systems, a user equipment (UE) may wirelessly communicate with one or more base stations (BSs), and resources are generally required to perform wireless communications. Resource allocation procedures and signaling procedures for resource allocation may depend on a capability of the UE, a type of traffic the UE supports, or a numerology (NUM) of the traffic.

The term "numerology" refers to waveform parameterization of the traffic. Parameters that define the numerology may include, but are not limited to, subcarrier frequency, carrier bandwidth, length of the cyclic prefix, modulation and coding scheme, samples per orthogonal frequency division multiplexing (OFDM) symbol and length of OFDM symbol.

In New Radio (NR), a next generation of the Long Term Evolution (LTE) communication standard, a UE may have the capability of supporting one or more numerologies and different types of traffic. For example, a BS may serve multiple UEs and traffic of these UEs can be multiplexed over a pre-defined transmission resource. A first UE may be a mobile device used to browse on the Internet. A second UE may be a device on an autonomous vehicle driving on a highway. The second UE may receive data with lower latency and higher reliability compared to the first UE. The second UE may support ultra-reliable low latency communication (URLLC) traffic, whereas the first UE may support enhanced mobile broadband (eMBB) traffic. The eMBB traffic and the URLLC traffic can have different numerologies.

WO2017/028889A1 describes a method comprising: configuring, by a network element, at least one cell for at least one terminal device; dividing a channel bandwidth of the at least one cell into at least a first part and second parts, the first part being situated between the second parts; determining a resource allocation for the at least one terminal device, the resource allocation comprising allocation of at least a bandwidth portion of at least one of the first part, the second parts; and transmitting an uplink grant to the at least one terminal device, the uplink grant comprising information about the resource allocation.

Therefore, efficient resource allocation procedures for UEs that support multiple numerologies and different types of traffic are desired.

### SUMMARY

Technical advantages are generally achieved by embodiments of this disclosure which describe a system and method for signaling of resource allocation for one or more numerologies.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

In accordance with an embodiment, a method for resource allocation is provided. In this example, the method includes receiving, by a UE, a first configuration including a plurality of downlink bandwidth partitions (BWPs) and a second configuration including a plurality of uplink BWPs, receiving first downlink control information (DCI) in a first BWP of the plurality of downlink BWPs in a first time interval, the first DCI including an uplink grant for uplink data transmission over a second BWP of the plurality of uplink BWPs, and including an allocation of resource blocks (RBs) in the second BWP, and transmitting the uplink data over the second BWP in a second time interval subsequent to the first time interval.

Optionally, in such an example, or in any of the previous examples, the method further includes receiving second DCI in the first BWP in a third time interval, the second DCI including a downlink grant for downlink data transmission over a third BWP of the plurality of downlink BWPs, and receiving the downlink data over the third BWP in a fourth time interval subsequent to the third time interval.

Optionally, in such an example, or in any of the previous examples, the first configuration and the second configuration are separately received.

Optionally, in such an example, or in any of the previous examples, the third time interval and the fourth time interval are in a scheduling interval.

Optionally, in such an example, or in any of the previous examples, the first DCI comprises a field identifying the second BWP.

Optionally, in such an example, or in any of the previous examples, the second DCI comprises a field identifying the third BWP.

Optionally, in such an example, or in any of the previous examples, a size of the first BWP is equal to a bandwidth of a group of RBs of a numerology associated with the first BWP.

Optionally, in such an example, or in any of the previous examples, the method further includes receiving a radio resource control (RRC) message prior to receiving the first DCI, the RRC message identifying the second BWP.

Optionally, in such an example, or in any of the previous examples, the method further includes receiving a RRC message, where the RRC message includes a location of the second BWP and a location of the third BWP, the location of the second BWP including a pre-defined starting position of the second BWP and a pre-defined size of the second BWP within the carrier bandwidth, the location of the third BWP including a pre-defined starting position of the third BWP and a pre-defined size of the third BWP within the carrier bandwidth.

Optionally, in such an example, or in any of the previous examples, the location of the second BWP is based on a PRB grid of a numerology associated with the second BWP.

Optionally, in such an example, or in any of the previous examples, the pre-defined starting positions and the pre-defined sizes of the second and the third BWPs are based on a granularity of one RB.

Optionally, in such an example, or in any of the previous examples, the first BWP and the third BWP use different numerologies.

In accordance with an embodiment, a UE is provided. In this example, the UE includes a processor and a non-transitory computer readable storage medium storing programming for execution by the processor, the programming including instructions to receive a first configuration including a plurality of downlink BWPs and a second configuration including a plurality of uplink BWPs, receive first DCI in a first BWP of the plurality of downlink BWPs in a first time interval, the first DCI including an uplink grant for uplink data transmission over a second BWP of the plurality of uplink BWPs, and including an allocation of RBs in the second BWP, and transmit the uplink data over the second BWP in a second time interval subsequent to the first time interval.

Optionally, in such an example, or in any of the previous examples, the programming further includes instructions to receive second DCI in the first BWP in a third time interval, the second DCI including a downlink grant for downlink data transmission over a third BWP of the plurality of downlink BWPs, and receive the downlink data over the third BWP in a fourth time interval subsequent to the third time interval.

Optionally, in such an example, or in any of the previous examples, the first configuration and the second configuration are separately received.

Optionally, in such an example, or in any of the previous examples, the third time interval and the fourth time interval are in a scheduling interval.

Optionally, in such an example, or in any of the previous examples, the first DCI comprises a field identifying the second BWP.

Optionally, in such an example, or in any of the previous examples, the second DCI comprises a field identifying the third BWP.

Optionally, in such an example, or in any of the previous examples, a size of the first BWP is equal to a bandwidth of a group of RBs of a numerology associated with the first BWP.

Optionally, in such an example, or in any of the previous examples, the programming further includes instructions to receive a RRC message prior to receiving the first DCI, the RRC message identifying the second BWP.

Optionally, in such an example, or in any of the previous examples, the programming further includes instructions to receive a RRC message, where the RRC message includes a location of the second BWP and a location of the third BWP, the location of the second BWP including a pre-defined starting position of the second BWP and a pre-defined size of the second BWP within the carrier bandwidth, the location of the third BWP including a pre-defined starting position of the third BWP and a pre-defined size of the third BWP within the carrier bandwidth.

Optionally, in such an example, or in any of the previous examples, the location of the second BWP is based on a PRB grid of a numerology associated with the second BWP.

Optionally, in such an example, or in any of the previous examples, the pre-defined starting positions and the pre-defined sizes of the second and the third BWPs are based on a granularity of one RB.

Optionally, in such an example, or in any of the previous examples, the first BWP and the third BWP use different numerologies.

In accordance with an embodiment, a method for resource allocation is provided. In this example, the method includes transmitting, by a base station, a first configuration including a plurality of downlink bandwidth partitions (BWPs) and a second configuration including a plurality of uplink BWPs, transmitting first downlink control information (DCI) in a first BWP of the plurality of downlink BWPs in a first time interval, the first DCI including an uplink grant for uplink data transmission over a second BWP of the plurality of uplink BWPs, and including an allocation of resource blocks (RBs) in the second BWP, and receiving the uplink data over the second BWP in a second time interval subsequent to the first time interval.

Optionally, in such an example, or in any of the previous examples, the method further includes transmitting second DCI in the first BWP in a third time interval, the second DCI including a downlink grant for downlink data transmission over a third BWP of the plurality of downlink BWPs, and transmitting the downlink data over the third BWP in a fourth time interval subsequent to the third time interval.

Optionally, in such an example, or in any of the previous examples, the first configuration and the second configuration are separately received.

Optionally, in such an example, or in any of the previous examples, the third time interval and the fourth time interval are in a scheduling interval.

Optionally, in such an example, or in any of the previous examples, the first DCI comprises a field identifying the second BWP.

Optionally, in such an example, or in any of the previous examples, the second DCI comprises a field identifying the third BWP.

Optionally, in such an example, or in any of the previous examples, a size of the first BWP is equal to a bandwidth of a group of RBs of a numerology associated with the first BWP.

Optionally, in such an example, or in any of the previous examples, the method further includes transmitting a radio resource control (RRC) message prior to receiving the first DCI, the RRC message identifying the second BWP.

Optionally, in such an example, or in any of the previous examples, the method further includes transmitting a RRC message, where the RRC message includes a location of the second BWP and a location of the third BWP, the location of the second BWP including a pre-defined starting position of the second BWP and a pre-defined size of the second BWP within the carrier bandwidth, the location of the third BWP including a pre-defined starting position of the third BWP and a pre-defined size of the third BWP within the carrier bandwidth.

Optionally, in such an example, or in any of the previous examples, the location of the second BWP is based on a PRB grid of a numerology associated with the second BWP.

Optionally, in such an example, or in any of the previous examples, the pre-defined starting positions and the pre-defined sizes of the second and the third BWPs are based on a granularity of one RB.

Optionally, in such an example, or in any of the previous examples, the first BWP and the third BWP use different numerologies.

In accordance with an embodiment, a base station is provided. In this example, the base station includes a processor and a non-transitory computer readable storage medium storing programming for execution by the processor, the programming including instructions to transmit a first configuration including a plurality of downlink BWPs and a second configuration including a plurality of uplink BWPs, transmit first DCI in a first BWP of the plurality of downlink BWPs in a first time interval, the first DCI including an uplink grant for uplink data transmission over a second BWP of the plurality of uplink BWPs, and including an allocation of RBs in the second BWP, and receive the uplink data over the second BWP in a second time interval subsequent to the first time interval.

Optionally, in such an example, or in any of the previous examples, the programming further includes instructions to transmit second DCI in the first BWP in a third time interval, the second DCI including a downlink grant for downlink data transmission over a third BWP of the plurality of downlink BWPs, and transmit the downlink data over the third BWP in a fourth time interval subsequent to the third time interval.

Optionally, in such an example, or in any of the previous examples, the first configuration and the second configuration are separately received.

Optionally, in such an example, or in any of the previous examples, the third time interval and the fourth time interval are in a scheduling interval.

Optionally, in such an example, or in any of the previous examples, the first DCI comprises a field identifying the second BWP.

Optionally, in such an example, or in any of the previous examples, the second DCI comprises a field identifying the third BWP.

Optionally, in such an example, or in any of the previous examples, a size of the first BWP is equal to a bandwidth of a group of RBs of a numerology associated with the first BWP.

Optionally, in such an example, or in any of the previous examples, the programming further includes instructions to transmit a RRC message prior to receiving the first DCI, the RRC message identifying the second BWP.

Optionally, in such an example, or in any of the previous examples, the programming further includes instructions to transmit a RRC message, where the RRC message includes a location of the second BWP and a location of the third BWP, the location of the second BWP including a pre-defined starting position of the second BWP and a pre-defined size of the second BWP within the carrier bandwidth, the location of the third BWP including a pre-defined starting position of the third BWP and a pre-defined size of the third BWP within the carrier bandwidth.

Optionally, in such an example, or in any of the previous examples, the location of the second BWP is based on a PRB grid of a numerology associated with the second BWP.

Optionally, in such an example, or in any of the previous examples, the pre-defined starting positions and the pre-defined sizes of the second and the third BWPs are based on a granularity of one RB.

Optionally, in such an example, or in any of the previous examples, the first BWP and the third BWP use different numerologies.

### BRIEF DESCRIPTION OF THE DRAWINGS

For a more complete understanding of the present invention, and the advantages thereof, reference is now made to the following description taken in conjunction with the accompanying drawings, in which:
FIG. 1 illustrates a network for communicating data.
FIG. 2 is an example of a frame structure provided by an aspect of the application.
FIG. 3 illustrates a partitioning of a system bandwidth into smaller bandwidth partitions according to an aspect of the application.
FIG. 4 illustrates an example of bandwidth partition indication and resource allocation signaling according to an aspect of the application.
FIG. 5 illustrates an example of bandwidth partition indication and resource allocation signaling in different scheduling intervals according to an aspect of the application.
FIG. 6 illustrates an example of resource allocation signaling according to an aspect of the application.
FIGs. 7A and 7B illustrate two examples of resource allocation grids that can be used according to aspects of the application.
FIG. 8 illustrates an example of semi-static bandwidth partition indication signaling according to an aspect of the application.
FIGs. 9A, 9B and 9C illustrate three examples of semi-static bandwidth partition indication signaling according to aspects of the application.
FIG. 10 illustrates a group common PDCCH implementation according to an aspect of the application.
FIG. 11 illustrates an example of how reference signals could be monitored outside a bandwidth partition allocated to a UE according to an aspect of the application.
FIG. 12 illustrates an example of a semi-static resource allocation in a FDM multiplexing of numerologies according to an aspect of the application.
FIG. 13 illustrates an example of dynamic resource allocation in a FDM multiplexing of numerologies according to an aspect of the application.
FIG. 14 illustrates an example of dynamic resource allocation in a FDM multiplexing of numerologies in which control information and data use the same numerology according to an aspect of the application.
FIG. 15 illustrates an example of dynamic resource allocation in a FDM multiplexing of numerologies in which control information and data use different numerologies according to an aspect of the application.
FIG. 16 illustrates an example of resource allocation in a TDM multiplexing of numerologies in which control information and data use different numerologies according to an aspect of the application.
FIGS. 17A-17C illustrate bandwidth partitioning.
FIGS. 18A and 18B illustrate bandwidth partitioning.
FIGS. 19A-19C illustrate methods according to aspects of the present application.
FIG. 20 illustrates a diagram of an embodiment processing system.
FIG. 21 illustrates a diagram of an embodiment transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The structure, manufacture and use of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Generally, embodiments of the present disclosure provide a method and system for the coexistence of mixed services in a flexible time-frequency frame structure. For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

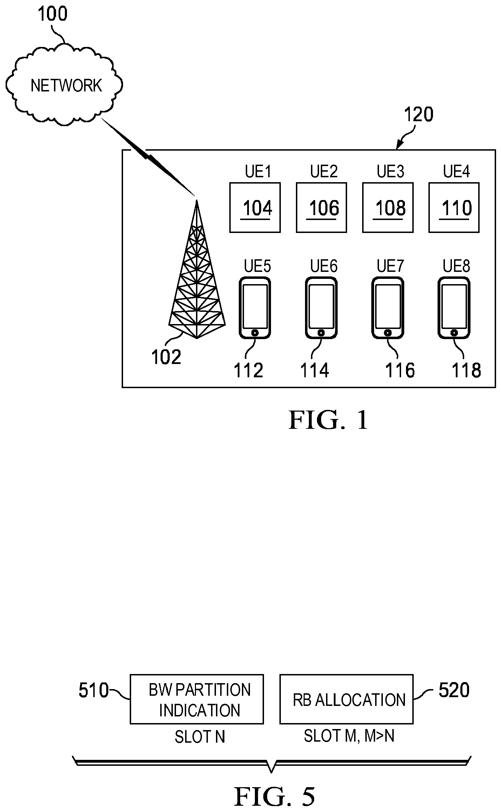

Referring to FIG. 1, a schematic diagram of a network 100 is shown. BS 102 provides uplink and downlink communication with the network 100 for a plurality of UEs 104-118 within a coverage area 120 of the BS 102.

As used herein, the term "BS" refers to any component (or collection of components) configured to provide wireless access to a network, such as an evolved Node B (eNB), gNodeB (gNB), a macro-cell, a femtocell, a Wi-Fi access point (AP), or other wirelessly enabled devices. The terms "eNB" and "BS" are used interchangeably throughout this disclosure. BSs may provide wireless access in accordance with one or more wireless communication protocols, e.g., long term evolution (LTE), LTE advanced (LTE-A), High Speed Packet Access (HSPA), Wi-Fi 802.11a/b/g/n/ac, etc. As used herein, the term "UE" refers to any component (or collection of components) capable of establishing a wireless connection with a BS, such as a mobile station (STA) or other wirelessly enabled devices. In some embodiments, the network 100 may comprise various other wireless devices, such as relays, low power nodes, etc.

In a specific example, UEs 104-118 employ orthogonal frequency division multiplexing (OFDM) to transmit traffic. It is contemplated that OFDM may be used in combination with a non-orthogonal multiple access scheme such as Sparse Code Multiple Access (SCMA). The BS 102 may, for example, be an access point. The described functions of the BS 102 may also be performed by multiple BSs using synchronous downlink transmission. FIG. 1 shows one BS 102 and eight UEs 104-118 for illustrative purposes, however there may be more than one BS 102 and the coverage area 120 of the BS 102 may include more or fewer than eight UEs 104-118 in communication with the BS 102.

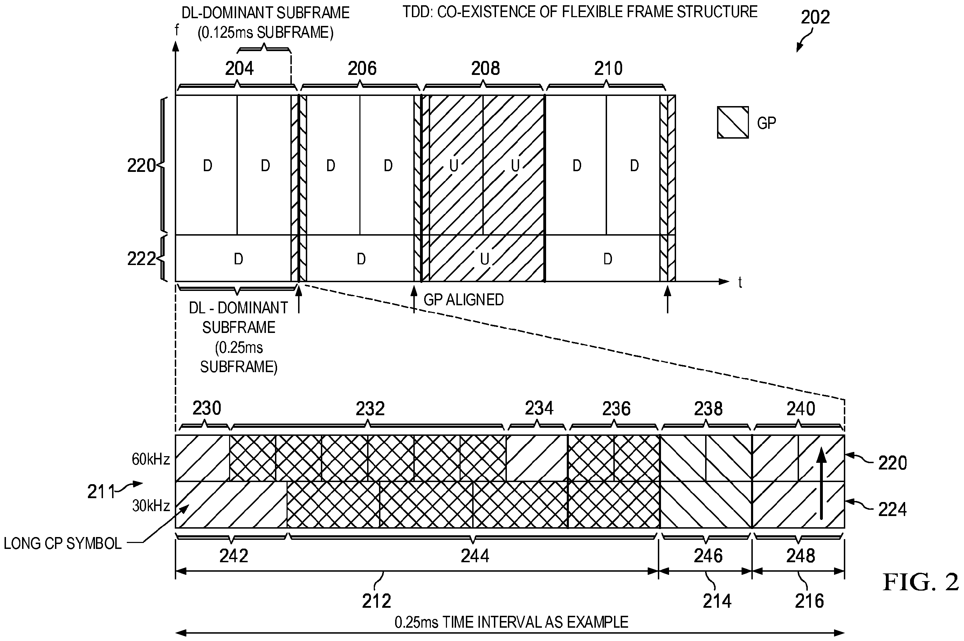

The network and the UEs of FIG. 1 can communicate with each other using time division duplex (TDD) or frequency division duplex (FDD) or self-contained TDD or unified/flexible duplex frame structures. Each sub-frame has a downlink segment, an uplink segment and a guard period separating the downlink segment from the uplink segment. Referring to FIG. 2, shown is a specific example of a time division duplex frame structure 202, where there are more DL symbols than UL symbols in the sub-frame. The frame structure 202 is composed of four sub-frames 204,206,208,210. In some embodiments, sub-frames can be downlink dominant, meaning more resources are allocated for downlink traffic compared to uplink traffic, or uplink dominant.

In some embodiments, the time division duplex communications are transmitted in two or more sub-bands each operating with a respective different sub-carrier spacing (SCS). In the example of FIG. 2, shown are two sub-bands 220,222 operating with different sub-carrier spacings. Specifically, sub-band 220 operates with a 60 kHz sub-carrier spacing, and sub-band 222 operates with a 30 kHz sub-carrier spacing. It is contemplated that any two suitable sub-carrier spacings can be used. For example, two numerologies with different sub-carrier spacings can be chosen from a set of scalable numerologies having sub-carrier spacings that differ by a factor of 2m, where m is an integer. Some other examples of scalable numerologies include 15 kHz and 30 kHz sub-carrier spacings; and 15 kHz and 60 kHz sub-carrier spacings.

The TDD nature of each sub-frame is generally indicated at 211 which shows a self-contained sub-frame structure including downlink segment 212, guard period 214 and uplink segment 216. For this example, OFDM symbols for data transmitted in the 60 kHz band have a time duration that is half that of OFDM symbols for data in the 30 kHz band. The contents of the sub-frame in the 60 kHz sub-band are indicated at 220 and include 10 downlink OFDM symbols 230, 232, 234, and 236, followed by a guard period that includes two OFDM symbol durations 238, and two uplink symbols 240. The contents of the sub-frame in the 30 kHz sub-band are indicated at 224 and include 5 OFDM symbols 242, 244, followed by a guard period that includes one OFDM symbol duration 246, and then one uplink symbol 248. It should be understood that this design is implementation specific. However, importantly, the TDD structure of the contents in the two sub-bands is aligned in the sense that the uplink transmissions on one sub-band (e.g. the 60 kHz sub-band) are aligned with uplink transmissions in another sub-band (e.g. the 30 kHz sub-band), and a similar alignment is present for downlink transmissions and the guard period. One or more symbols, in this example the symbols 230 and 236, have a longer cyclic prefix than the remaining symbols 232, 236 of their sub-bands. Similarly, the symbol 242 has a longer cyclic prefix than the remaining symbols 244 of its sub-band. The different cyclic prefix durations may be used to ensure the desired alignment of the guard period and the uplink and downlink transmissions.

In the example of FIG. 2, the overall frame structure 202 is 1 ms in duration, and the sub-frames 204,206,208,210 are 0.25 ms in duration. In the 60 kHz band, each 0.25 ms sub-frame is further divided into two halves each of 0.125 ms. The frame structure 220 for the 60 kHz band includes symbols 230,232 in the first half and includes symbols 234,236,238,240 in the second half.

In some implementations, for each time division duplex frame or sub-frame, scheduling information in respect of downlink traffic of the first type may be sent based on a predefined scheduling interval which may be equal to the duration of one time division duplex frame. In other implementations, a scheduling interval length for the first type of traffic can be dynamically varied. For example, the scheduling interval may be one slot for a first period of time and an aggregation of time slots for a second period of time. Furthermore, in the case of DL-centric TDD, it may not be the case that the first type of traffic is scheduled using all of the DL symbols available in a TDD sub-frame. In addition, for each sub-frame, scheduling information is transmitted in respect of downlink traffic of the second type based on a scheduling interval equal to the duration of one sub-frame. For the example of FIG. 2, the scheduling information for the traffic of the first type is sent at the beginning of the time division duplex scheduling interval, and is based on a scheduling interval of 0.5 ms or less, corresponding to the duration of the downlink portion of the frame structure. The scheduling information for the traffic of the second type is sent at the beginning of each sub-frame, and is based on a 0.25 ms scheduling interval. The scheduling information indicates resources that are allocated for traffic of the first type or traffic of the second type in the respective scheduling interval. In FIG. 2, it should be understood that traffic of the first type may be transmitted in the resources allocated primarily for traffic of the second type, or vice versa, according to the methods discussed below.

In some embodiments, at some time after the first sub-frame, information is transmitted that updates the scheduling information in respect of downlink traffic of the first type in a sub-frame other than the first sub-frame.

When the BS 110 has data to transmit to the UEs, the BS 110 transmits this data in one or more downlink transmissions using allocated resources, for example time/frequency resources. Specific resource partitions may be assigned for transmissions to the UEs.

In some embodiments, the resources for different types of traffic may use different numerologies. Simply by way of example, low latency traffic may be scheduled on a resource having a first numerology and latency tolerant traffic may be scheduled on a resource having a second numerology. The first and second numerologies are different. For example, the subcarrier spacing of the low latency resources is different from the subcarrier spacing of the latency tolerant resources. Continuing with the example of low latency traffic and latency tolerant traffic, resources for the low latency traffic may have a subcarrier spacing that is larger than the subcarrier spacing of the resources for latency tolerant traffic. The subcarrier spacing of the resources for the low latency traffic may be 60 kHz and the subcarrier spacing of the resources for the latency tolerant resources may be 15 kHz. By using larger subcarrier spacing, the duration of each OFDM symbol in the low latency resources may be shorter than the duration of each OFDM symbol in the latency tolerant resources. Latency tolerant TTUs and low latency TTUs may include the same number of symbols, or different numbers of symbols. The symbols in a latency tolerant resource and low latency resource, in which the resources are fixed duration transmission time units (TTUs) may have the same numerology, or different numerologies. If a resource is defined as having a fixed number of OFDM symbols regardless of numerology, then more than one low latency TTU can be transmitted during a latency tolerant UE scheduling interval. The latency tolerant UE scheduling interval may be an integer multiple of the low latency TTU. The length of symbols in a latency tolerant TTUs and/or low latency TTU may be varied by changing the length of a cyclic prefix in the latency tolerant TTUs and/or low latency TTU. In other embodiments, the low latency resources and the latency tolerant resources have the same numerology. A low latency TTU may then be defined to have fewer OFDM symbols compared to the number of OFDM symbols in a latency tolerant UE scheduling interval, such that there will still be more than one low latency TTU within a latency tolerant UE scheduling interval. For example, the duration of a low latency TTU may be as short as a single OFDM symbol. It is also contemplated that the low latency transmission and the latency tolerant transmission might not have the same number of symbols per TTU, whether or not they have the same numerology. If different numerology is used, the symbols of a low latency TTU with larger subcarrier spacing may align at the boundary of the one or multiple symbols of the latency tolerant TTU with a smaller subcarrier spacing.

A TTU may be divided into a number of slots, for example 2 slots. A low latency slot duration may be equal to or shorter than a latency tolerant slot or a long-term evolution (LTE) slot. A low latency TTU may be alternatively referred to as a mini-slot, if it contains less symbols than a slot. A mini-slot may contain any number of symbols that is fewer than the number of symbols in a slot, e.g., 1, 3, 6 symbols if a slot is 7 symbols.

While some of the embodiments disclosed below are discussed with regard to a time interval basis that is a slot, it is understood that similar mechanisms can be applicable for other time granularity as well, whenever appropriate. Other examples of time granularity include mini-slot, aggregation of mini-slots, aggregation of slots, aggregation of slot and mini-slot. It should also be understood that embodiments described below are applicable to FDD or TDD or other duplex systems. Below are not limited to either FDD or TDD systems.

The present application is directed to signaling details of resource allocation for traffic that is transmitted from a base station or group of base stations to a UE having a single numerology or a mixed numerology. A component carrier can support data transmission with one or multiple numerology. The mixed numerology can occur in the context of frequency division multiplexing (FDM) or time division multiplexing (TDM) of numerologies. Resource allocation may include allocating partitions of the transmission bandwidth and/or resource blocks for transmission. A partition of the carrier bandwidth can be referred to as bandwidth partition or bandwidth part or sub-band. These terminologies are interchangeably used in the application to refer to a partition of a carrier bandwidth. A resource element is a basic resource unit of transmission that is a single OFDM symbol (time domain) transmitted on a single sub-carrier. A transmission unit (TU) containing N symbols in time and M sub-carriers in frequency can be used as basic scheduling unit. For slot based transmission, N can be 7 symbols and M is 12 sub-carriers, and the TU is referred to as physical resource block (PRB). For a mini-slot, which has less number of symbols than a slot, a TU can have K symbols and L sub-carriers, where K < N and L may or may not be equal to M. The TU in a mini-slot context can be called a mini-PRB or short-PRB, which may have 2 symbols and 12 subcarriers, if the mini-slot length is two symbols. The resource allocation can be performed in a semi-static manner or a dynamic manner. Examples of each will be described in detail below.

### Single Numerology

In the case of allocating resources using a single numerology, a two-step process may be performed as a function of bandwidth of the UE. In some embodiments, a UE may have a bandwidth that is comparable to a bandwidth used by the system, which may be referred to hereinafter as a system bandwidth or a cell bandwidth. In other embodiments, the UE may have a bandwidth that is less than the system bandwidth. The terms "carrier bandwidth", "system bandwidth", and "cell bandwidth" are used interchangeably herein. When the UE bandwidth is less than the system bandwidth, aspects of the present disclosure provide for bandwidth partitioning of the system bandwidth into small bandwidth portions comparable in size to the UE bandwidth.

A first step involves the base station notifying the UE of a bandwidth partition, if necessary, i.e. if the UE bandwidth is less than the system bandwidth (BW). Even if the UE BW supports whole transmission/system/cell BW, signaling of BW partition may still be useful if the UE payload is low and scheduling flexibility over a large BW is not necessary. Moreover, scheduling over a smaller BW partition results in lower scheduling overhead. In one embodiment, if the UE bandwidth is comparable to the system bandwidth, first step of BW partition indication can be omitted, i.e., the notification may be that the partition is simply the full bandwidth. The notification may be sent to the UE in a radio resource control (RRC) message, as part of a system information block (SIB) message, in a UE specific downlink control indication (DCI) message or in group-common message. In the case of a group-common message, UEs having a same capability can be grouped together and can be signaled by scrambling the message using a group radio network temporary identifier (RNTI).

The resource allocation is then performed in a second step by allocating resource blocks for transmission. This allocation can be made in a UE-specific downlink control indication (DCI). After the bandwidth partition is notified to the UE, the resource block allocation can be performed within the bandwidth partition. In some embodiments, resource block allocation and BW part indication can be conveyed in the same DCI.

The BW partition can be indicated in a semi-static or dynamic manner. The resource block allocation may be signaled to the UE using a resource block bitmap. The resource allocation bitmap can be function of the bandwidth partition, which was previously signaled to the UE. For example, the payload of the bitmap would depend on the size/frequency range of the bandwidth partition. The resource blocks can be allocated in a contiguous manner or non-contiguous manner. If the UE bandwidth is less than the cell bandwidth, then for both of the contiguous or non-contiguous allocations, the bandwidth of the allocate resources must fall within the bandwidth of the UE bandwidth. Within the BW partition, signaled either semi-statically or dynamically, type 0 or type 1 or type 2 LTE PRB allocation can be obtained.

The resources can be dynamically allocated. The BW partition and RB allocation can be indicated dynamically within a slot. The resource allocation, signaled in the DCI, may have a first field defining a starting position or location of the bandwidth partition. The first field in the DCI may notify the UE of the bandwidth partition to which the UE needs to switch for subsequent data transmission. Another field or group of fields together will provide a resource block bitmap within the bandwidth partition. One example is using one field that contains a bitmap of RBs or a bit map of groups of RBs that defines any possible combination of contiguous or non-contiguous RB or RBG allocation within the BW partition. If there are K RBs or RBGs formed, a resulting bitmap is of size K bits. Another example is for contiguous RB or RBG allocation that starts from the edge of the BW partition, where log2G bits may be required, where G is the number of possible combinations of contiguous RB or RBGs. Another example is for contiguous RB or RBG allocation that can start from any location other than the edge of the BW partition. For the last example, a start position needs to be further indicated within the BW partition. Any LTE-like RB allocation mechanism can be used, for example, type 0, type 1 or type 2. Alternatively, bitmaps based on groups of RBs can be used to further reduce signaling overhead. Each bit in the bitmap defines whether a resource block is allocated for the UE, beginning at the starting position defined in the first field. Both contiguous and non-contiguous allocation is possible within the bandwidth partition.

In the case of mixed numerology, a SIB, a dynamic L1 signaling message such as a UE specific control message, or a group common control message or an RRC message can transmit an indication of a sub-band or bandwidth partition configuration as part of a semi-static allocation. Here, semi-static allocation refers to configuring resources for a numerology by higher layer signaling. Network may configure resources for numerologies either in FDM or TDM or combined FDM and TDM manner and notify UE of the configuration by semi-static signaling such as RRC or system information, or alternatively by DCI such as group-common control message. The SIB or a group common control message can be transmitted in a default numerology. In one embodiment, SIB1 contains the resource configuration of the numerologies (e.g., configuration of the bandwidth partitions used for one or more numerologies).

In one example, in the case of dynamic allocation, there does not have to be a sub-band association of numerology for the data channel in a given scheduling interval, as the DCI conveyed in the control resource set (CORESET) within the scheduling interval indicates the resource allocation for the data channel. Control resource set is a time-frequency resource that contains search spaces for a UE to monitor and receive DCI. In a scenario where the UE bandwidth is less than the system bandwidth and bandwidth partitions are utilized, the DCI conveyed in the UE specific control resource set can indicate a resource allocation within the system bandwidth for the data channel that is in a different bandwidth portion of the system bandwidth than the control resource set. This implies that the CORESET is in a first bandwidth partition and the data channel is in a second bandwidth partition. In such a dynamic allocation, a period of time must be allowed between the control resource set and the data to allow the UE to receive and process the DCI received in the control resource set and tune to the location where the data is allocated. The UE tunes from first radio frequency (RF) BW, which contains the control resource set, to a second RF BW where data is scheduled within the scheduling interval. Some time is needed for the UE to tune from one RF BW to another. In one example, if there are 7 symbols in the slot and the control resource set is located in the first symbol, a time duration of one or two symbols may be needed before the UE can tune to a RF BW containing the data channel that spans the rest of the symbols in the scheduling interval of one slot. More generally, scheduling interval may be M=>1 symbols and K=>1 symbols may be needed for switching. In some embodiments, the time needed to tune in micro-seconds is the same across all numerologies. In another embodiment, the time needed to tune in micro-seconds is different across the numerologies. More generally, time interval including an integer number of symbols based on a given numerology may be needed for a UE to switch bandwidth partitions.

When signaling the bandwidth partition, if the UE bandwidth is less than the system bandwidth, the UE may support one numerology or a selected numerologies of a full set of possible numerologies or the UE may support the full set of possible numerologies. If the UE BW is limited and data is received over sub-bands of different numerologies, the RF BW over which data is received has to be less or equal to UE BW. This implies that the sub-bands/bandwidth partitions, where data based on different numerologies are transmitted simultaneously in a given time, are located within the bandwidth capability supported by the UE. Data received over different numerologies may correspond to different TBs. In some implementations, the UE can simultaneously receive traffic over multiple sub-bands. This implies that a UE may have multiple bandwidth partitions active for a given interval and different packets are transmitted in different bandwidth partitions, the bandwidth partitions may have same or different numerologies. Not all UEs may be able to support multiple active bandwidth partitions. In one example, simultaneous transmission is not supported for multiple numerologies at least for some UEs based on their capability.

The network, system, or one component carrier can support different UE capabilities in terms of UE BW. UEs can be grouped according to their capabilities of BW and a pool BW partition sizes can be configured. The BW partition sizes can be based on bandwidth of a group of PRBs based on a default numerology. In another embodiment, BW partition sizes can be defined for each numerology based on bandwidth of a group of PRBs for that numerology. This implies that in a carrier BW, there can be a specified or configured set of bandwidth partitions. One or more those bandwidth partitions can be active for a UE in a given time for data transmission. For example, a carrier can support K BW partition sizes if UEs are classified into K groups according to their BW capabilities. Values of K can be same or different for different numerologies.

If a network, system or one component carrier can support mixed numerology, it can carry data transmission of UEs of different capabilities. For example, a UE can support one or multiple numerologies. The UE is configured with one or multiple control resource set candidates for each numerology. Depending on whether control and data are sent with the same numerology or not, the UE may be configured with a control resource set only in a default numerology or in each numerology it supports. This implies that control information can be received by the UE in a first bandwidth partition based on a first numerology and data is transmitted in a second bandwidth partition based on a second numerology. If control and data are transmitted with same numerology, they can be transmitted in same bandwidth partition. If control and data are based on different numerology, they are transmitted in different bandwidth partitions. In this example, bandwidth partitions where control and data are received may have the same or different sizes, the same or different center frequencies. In one example, a UE may or may not be able to receive data simultaneously over multiple numerologies.

In the case of TDM multiplexing of numerologies, an RRC message or SIB message may indicate a control resource set to use for a given numerology and/or a given bandwidth partition, for a case where the UE bandwidth is less than the system bandwidth. If a UE can receive data over multiple numerologies, the UE can be configured with multiple control resource sets, where each control resource set is used for one numerology. In another embodiment, multiple control resource sets can be configured for a UE for each numerology within the bandwidth partitions based on the numerology. In the case of multiple control resource sets configured for a UE, RRC signaling or system information notifies the UE which control resource set to use for a given numerology within a bandwidth partition. For example, there can be K =>1 CORESETs configured for a UE within a bandwidth partition. However, UE may not monitor all of them simultaneously. RRC signaling may notify UE to monitor the active CORESETs among the set of configured CORESETs within a bandwidth partition.

Bandwidth partitioning of the system bandwidth may be used for multiple different reasons. In one example, if the UE bandwidth is not equal to the size of the system bandwidth. In another example, bandwidth partitioning may be used to reduce the resource block allocation overhead. In some instances the UE does not need to be scheduled over the entire system bandwidth, or even a large portion thereof. In the case of a low power machine-type communication (MTC) device, it may be costly in terms of overhead to operate the device over a large bandwidth. In a further example, bandwidth partitioning may be used when the UE does not need high frequency diversity, i.e., scheduling flexibility across a large BW is not required.

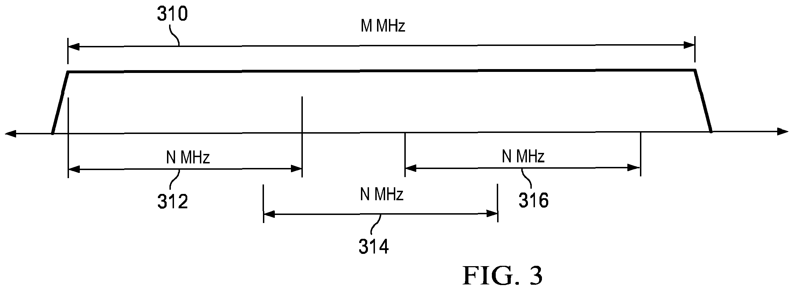

For a system bandwidth of M MHz, when resources are allocated for use of a UE having a bandwidth of N MHz, which is less than M MHz, the network needs to notify the UE of the location of the N MHz bandwidth allocated for the UE. The notification of the resource allocation can be performed in a semi-static manner or dynamic manner. This implies that the notification of the configuration of the bandwidth partition may include location of the bandwidth partition within the carrier bandwidth. FIG. 3 illustrates a system bandwidth 310 of M MHz and examples of the location of three different N MHz bandwidths 312, 314, 316 within the M MHz system bandwidth.

The time domain unit of resource allocation may be on the order of a slot, a mini-slot, an aggregation of slots and an aggregation of mini-slots. A mini-slot contains one or more OFDM symbols, but the number of symbols is less than a slot. An aggregation of slots is more than one slot. An aggregation of mini-slots is more than one mini-slot and may be more or less than a single slot.

The following describes an approach for dynamic and explicit allocation. This approach may have a higher overhead than a semi-static approach of allocation. When a bandwidth of less than the system bandwidth is allocated to the UE, the approach includes sending a first indication that includes the location of the particular bandwidth partition within the system bandwidth and then sending a second indication that includes the resource to be allocated within the bandwidth partition. This implies that the first indication identifies which bandwidth partition the UE needs to switch for data transmission. The first indication can be dynamic or semi-static. The second indication is dynamic. First and second indications can be signaled in separate intervals (i.e., first indication comes in a previous interval) or jointly in the same interval.

The system bandwidth of M MHz can be partitioned into bandwidth allocation units. The bandwidth allocation units allow flexible allocation. An N MHz bandwidth partition can be composed of multiple bandwidth allocation units.

The base station can use explicit signaling in a DCI to notify the location of the N MHz bandwidth partition that the UE is to monitor for traffic. The location indication in the DCI may define a starting position of the N MHz bandwidth within the overall M MHz system bandwidth. For instance, a system bandwidth may have a pre-defined number of potential starting positions for bandwidth partitions and the location indication may define one of those starting points. If there are K possible start positions, the number of bits to define the starting position would be log₂K bits. This implies that the network notifies the UE of the starting position(s) of one or more bandwidth partitions supported/configured for the UE, and the starting position(s) are assigned from a set of supported candidates.

The location indication defining the bandwidth partition can be transmitted in a bitmap in the DCI or RRC signaling or group common message. The bitmap can define a contiguous or a non-contiguous (distributed) portion of the system bandwidth. For example, in a scenario in which the bitmap includes a bit for each bandwidth allocation unit in the N MHz bandwidth, in a contiguous portion of spectrum, several adjacent bits would define the resource allocation with the bits being set to "1" and other bits being set to "0". In a non-contiguous portion of spectrum, there would be at least some bits set to "0" where no resources allocation units are allocated between bits set to "1" where resources allocation units are allocated. This implies that, in one example, bandwidth partition formation as a collection/group of contiguous or non-contiguous bandwidth allocation units can be notified to the UE by a DCI message or a RRC message (e.g., in the format of a bitmap).

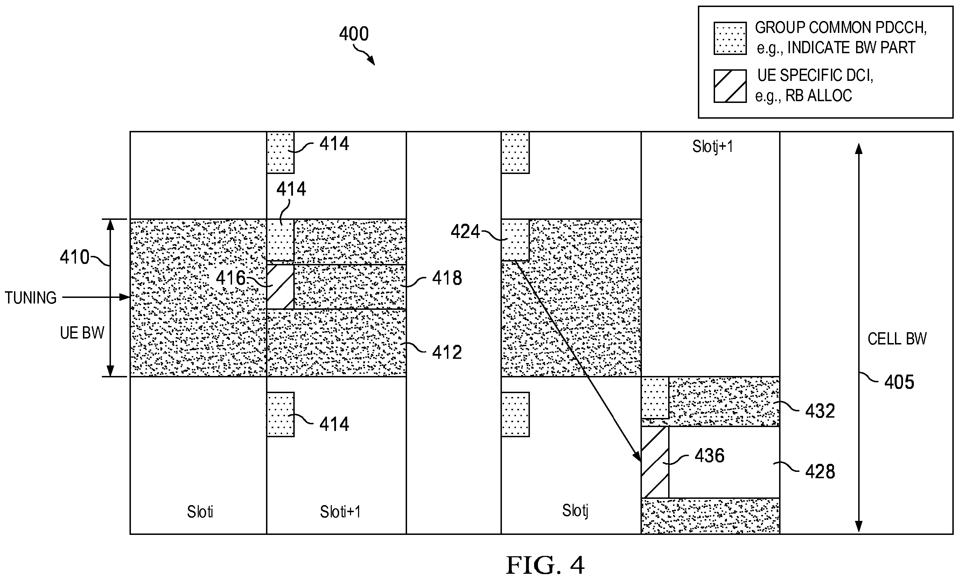

FIG. 4 illustrates in a multi-scheduling interval resource 400, an example of how a bandwidth partition may be changed from a first location in a first scheduling interval to different location in a subsequent scheduling interval for the particular scenario of the UE bandwidth being less than the system bandwidth. In the multi-scheduling interval resource, the horizontal direction is the time domain, including OFDM symbols, and the vertical direction is the frequency domain over a number of sub-carriers. The entire vertical extent 405 of the resource is intended to represent the system bandwidth. FIG. 4 includes multiple scheduling intervals, identified as slots. A first slot is identified as Slot i and a second slot is identified as Slot i+1. There is a break after Slot i+1 indicating any number of slots occur before a third slot identified as Slot j. A fourth slot is identified as Slot j+1. Slot i shows a bandwidth partition 410 equal to a UE bandwidth. However, more generally the bandwidth partition can be based on UE bandwidth capability. Slot i+1 shows a bandwidth partition 412 that is the same size and at the same location as in Slot i. The group common PDCCH is located at multiple locations over the cell bandwidth. The group common PDCCH can be monitored by the UE, if the group common PDCCH falls within the UE bandwidth. This implies that if there is common search space configured for a UE in the current bandwidth part, the UE can monitor the group common PDCCH. The group common PDDCH can notify the UE of the bandwidth partition update. The update can be in some subsequent slot. If the UE is configured with multiple control resource set candidates, the bandwidth partition indication sent by common PDCCH, implicitly notifies the UE to tune to another control resource set, i.e., the updated bandwidth partition will contain a re-configured control resource set. The common PDDCH may or may not be monitored every slot. It can be configured with a periodicity. For example, every 10 slots, the UE monitors the common PDCCH, if present, in the PDCCH region within its UE bandwidth. In the FIG. 4, the common PDCCH in Slot j indicates a bandwidth partition update for next slot Slot j + 1. In Slot j + 1, the UE will tune to another control resource set.

Slot i+1 includes three group common PDCCH 414. Which one of the three common PDCCH 414 indicates the bandwidth partition for the UE depends on whether the group common PDCCH is within the UE bandwidth. Here, it implies that if the search space for observing common PDCCH is not within the current active bandwidth partition, the UE may not monitor common PDCCH for the duration of that active bandwidth partition. In another example, network may re-configure the current bandwidth part with common search space and notify UE of the update so it can start monitoring for the PDCCH. Alternatively, network may configure a UE to monitor common PDCCH in a UE specific search space. This may be useful when the current bandwidth partition does not have common search space however receiving common PDCCH may be beneficial for the UE's operation. For example, when no UE specific PDCCH is sent, network may send common DCI or PDCCH in UE specific search space. Note that the bandwidth partition indication sent by the common PDCCH and resource allocation within the indicated bandwidth partition may not occur in the same slot. For example, the common PDCCH in a previous slot can indicate bandwidth partition. UE specific DCI 416 then indicates the resource allocation within the bandwidth partition 412. Also included in the bandwidth partition 412 is the data 418 in the allocated resource.

Once the UE knows the configured bandwidth partition to monitor, the UE monitors that partition for the UE specific DCI until notified by the network to monitor a different bandwidth partition. In Slot j, the UE reads the group common PDCCH 424 and the UE is notified that the UE is to monitor a different bandwidth partition 432 in a subsequent scheduling interval, that being Slot j+ 1. Then in Slot j+1 the UE reads the UE specific DCI 436. Also included in the bandwidth partition 432 is the data 428 in the allocated resource. The example mentioned above corresponds to dynamic bandwidth partition indication by the aid of a group common PDCCH. It may not be as dynamic as sending a bandwidth partition indication in every slot of a UE specific DCI.

Set of BW partition sizes that are allocated can be pre-defined. In another example, BW partition size is dynamically configured.

One or multiple frequency regions can be used to send group common PDCCH or the SIB, or both. If a common PDCCH is used to notify the UE, the UE bandwidth should overlap with at least one common PDCCH region to enable the UE to receive the PDCCH successfully. The common PDCCH may be a group common PDCCH in some implementations to notify more than one UE at a time. Periodically, the UE may monitor the common PDCCH or the SIB, or both, for updates. The UE should still receive UE-specific PDCCH, which can include the resource allocation information, regardless of whether common PDCCH is received or not. The bandwidth partition indication sent via system information or RRC signaling can be adopted when dynamic adaptation is not necessary.

In the dynamic allocation approach, the location indication for the bandwidth partition can be sent prior to the location indication for the PRB resource allocation or together with the PRB allocation.

In some implementations, dynamic allocation can include sending the location indication for the bandwidth partition in a first scheduling interval and sending the location indication for the resource allocation for PRBs in a second scheduling interval. If the bandwidth partition indication comes before PRB allocation and in a DCI, the DCI containing the bandwidth partition indication should appear before the DCI containing PRB allocation. FIG. 5 illustrates an example of a DCI 510 sent in slot n that includes the bandwidth partition indication to notify the UE the location of the particular bandwidth partition that the UE should monitor. Also shown is a DCI 520 sent in slot m, where m>n, which includes the resource block allocation to notify the UE the location the UE should monitor for data traffic. In some implementations, the location indication for the bandwidth partition and the location indication for the resource allocation are sent in a same scheduling interval, but in different symbols of a control region. Here, it is implied that control information related to bandwidth partition and indication of PRBs within the bandwidth partition can be transmitted in different symbols within a scheduling interval (e.g., the first symbol contains control for bandwidth partition, and the second or any other subsequent symbol contains control for PRB allocation).

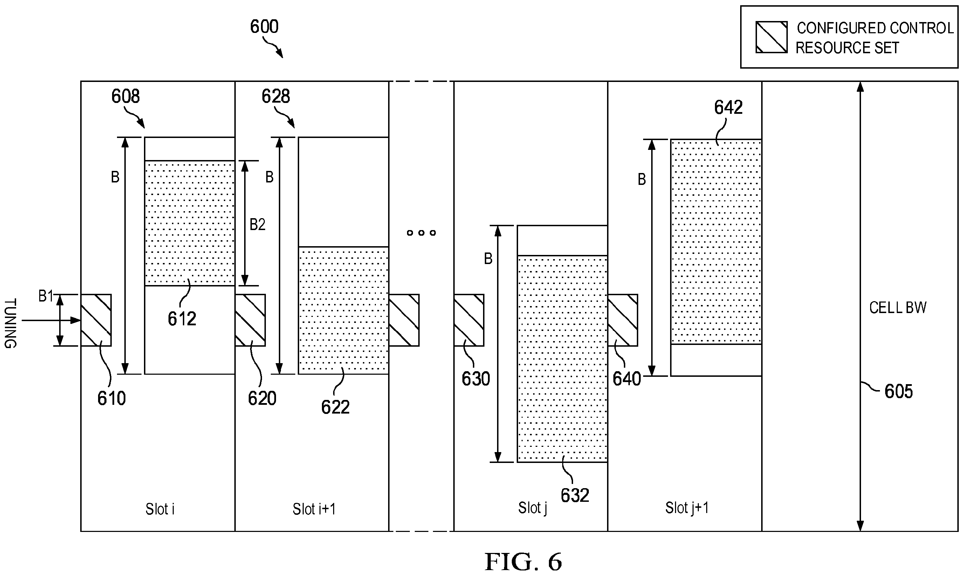

FIG. 6 illustrates in a multi-scheduling interval resource 600, an example of how a bandwidth partition may be changed from a first scheduling interval to a subsequent scheduling interval, for the particular scenario of the UE bandwidth being less than the cell bandwidth. In the multi-scheduling interval resource, the horizontal direction is the time domain and the vertical direction is the frequency domain. The entire vertical extent 605 of the resource is intended to represent the system bandwidth. FIG. 6 includes multiple scheduling intervals, identified as slots. A first slot is identified as Slot i and a second slot is identified as Slot i+1. There is a break after the second slot Slot i+1 indicating any number of slots occur in an intervening time prior to a third slot identified as Slot j. A fourth slot is identified as Slot j+1. A bandwidth partition notification can be sent in one or more previous slots (not shown) to identify a location where the bandwidth partition that includes a control resource set for indicating the location of the resource allocation. Slot i shows a configured control resource set 610 in a first symbol of Slot i, the control resource set 610 having a bandwidth B1 that is less than the bandwidth B of the UE. The location of B1 may be implicitly conveyed when the control resource set is configured for the UE. The control resource set 610 notifies the UE where to monitor for the resource allocation. Here, the bandwidth partition indication for the data channel and PRB allocation are conveyed in the same DCI. In FIG. 6, the resource allocation contains the data 612 and has a bandwidth B2, which is also less than the UE bandwidth B. The data 612 can use a contiguous set of resource blocks or a non-contiguous set of resource blocks. A duration of time occurs between the control resource set 610 and the data 612 to allow the UE time to tune to a different portion of the cell bandwidth. The UE may buffer all of the transmitted data within the UE bandwidth B and discard the data that is not within the allocated resource identified by the control resource set 610. Alternatively, if possible, the UE will buffer only the bandwidth portion that contains the PRBs allocated in the DCI. In this particular example, if PRBs 3-10 and 20-30 are allocated, UE can buffer the BW from PRB 3 to PRB 30.

Tuning first to a smaller BW that contains control resource set and then to a larger bandwidth B that contains the resource allocation can enable the UE to operate in power saving mode because the UE will not have to always buffer information over bandwidth partition of B. In an embodiment, B can be the cell bandwidth. In this particular example, UE only monitors the first bandwidth partition, which can be significantly less than cell bandwidth, that contains the control resource set. Then if the DCI is detected in the control resource set, the UE then tunes to the bandwidth partition B for data transmission.

Slot i+1 shows a same size control resource set 620 at a same location in Slot i+1 as in Slot i. Data 622 is at a different location than in Slot i, but still occupying a bandwidth less than the UE bandwidth B. Note that a bandwidth partition of size B that corresponds to UE bandwidth is dynamically located for data transmission, possibly in every scheduling interval. Slot j shows a same size control resource set 630 at a same location in Slot j as in Slot i and Slot i+1. Data 632 is at a different location than in Slot i and Slot i+1 and has a different size than Slot i and Slot i+1, but still occupying a bandwidth less than the UE bandwidth B. Slot j+1 shows a same size control resource set 640 at a same location in Slot j+1 as in Slot I, Slot i+1 and Slot j. Data 642 is at a different location than in Slot i, Slot i+1 and Slot j and a different size than Slot i and Slot i+1,but still occupying a bandwidth less than the UE bandwidth B.

FIG. 6 shows each slot having a control resource set and an allocated resource for data. While it is described above that the control resource set is used to notify the UE of the location of the allocated resource within the same scheduling interval, it is also possible that the control resource set may be used to notify the UE of the location of the resource allocation for a subsequent scheduling interval.

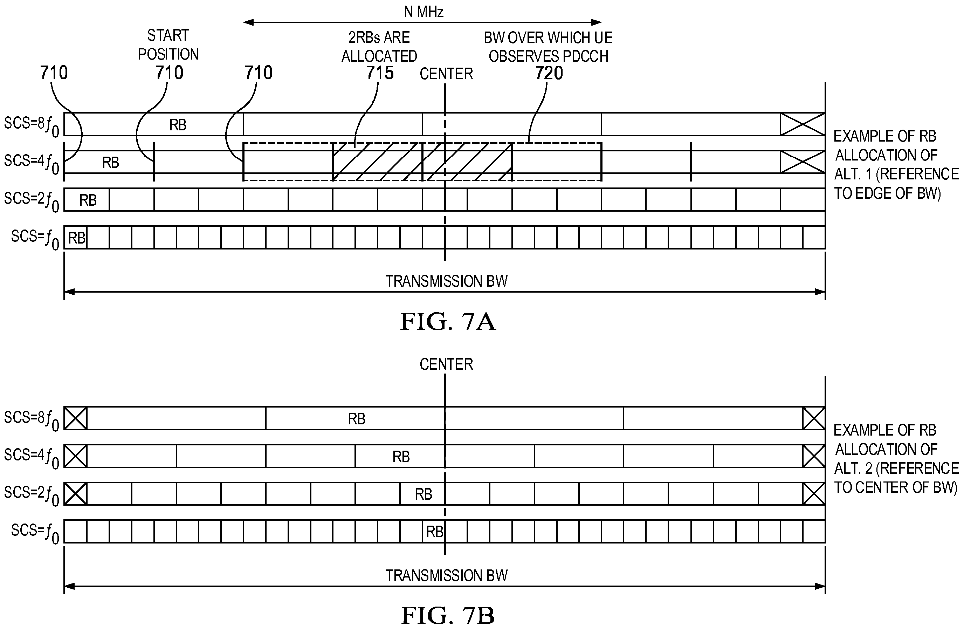

FIGs. 7A and 7B illustrate examples of two possible PRB grids that could be used for start positions of bandwidth partitions for four different sub-carrier spacings: f0, 2f0, 4f0 and 8fo. Location of a bandwidth partition can be based on the PRB grid, both for semi-static and dynamic bandwidth partition allocation. In the first example of FIG. 7A, alignment of bandwidth partition starting positions 710 is with reference to the positioning of PRBs for each sub-carrier spacing. In other words, the starting positions 710 may vary by multiples of one PRB. In FIG. 7A, the resource being allocated is two resource blocks 715. The two resource blocks 715 are less than the UE bandwidth 720 which consists of a bandwidth partition of size of four PRBs of 4f0. In case of semi-static or dynamic indication of bandwidth partition in a previous slot, the bandwidth partition of equivalent size of four PRBs will contain the control resource set as well. In case of dynamic bandwidth partition indication together with PRB allocation, control resource set can be located in a bandwidth partition which occurs in time before the bandwidth partition for data transmission. The bandwidth partition that contains control resource set can also be based on PRB grid, i.e., the size amounts to a group of PRBs, with sizes varying by one PRB. In the second example, the alignment of the bandwidth allocation starting positions is with reference to the middle of the bandwidth for each sub-carrier spacing, as shown in 7B. Bandwidth partition size/location/starting position can be based on the PRB grid of the numerology used for data transmission. Alternatively, bandwidth partition size/location/starting position can be based on the PRB grid of a default numerology, for example, f₀. In the examples of FIGs. 7A and 7B, the values of the bandwidth partition starting position and the bandwidth partition size each may be defined based on a granularity of one resource block. This implies that, based on the examples in FIGs 7A and 7B, a bandwidth partition can start at any PRB and can be composed of a size which can be any group of contiguous PRBs, from the starting position.

In another embodiment, the bandwidth partition size may not exactly equal to the bandwidth of a group of PRBs for a given numerology. For example, bandwidth partition size may amount to a bandwidth of 10 PRBs and one half of a PRB.

During initial access, or at another time the UE provides its capability to the network, the UE provides the size of the operating bandwidth of the UE to the network. Based on a numerology being used for transmission to the UE, the network signals to the UE where the PDCCH is located, i.e. a bandwidth partition containing at least the control resource set, within the system bandwidth that the UE is to monitor. The bandwidth that the UE is to monitor for the PDCCH has to be equal to or less than the UE bandwidth so that the UE can obtain all of the relevant information.

In a semi-static, or otherwise referred to as pre-configured, approach RRC signaling can be used to notify the UE of location indication for the bandwidth partition that at least contains the configured control resource set. Dynamic resource allocation, i.e., PRBs, takes place within the bandwidth partition that was semi-statically configured.

A time/frequency resource containing at least one search space is obtained from MIB or system information or implicitly derived from initial access information. A time/frequency resource containing additional control search spaces can be configured using dedicated RRC signaling.

In the following description, it is once again assumed that the UE bandwidth is less than the cell bandwidth and bandwidth partitioning is being used. Bandwidth partitions are less than or equal to the UE bandwidth.

The UE may be configured with one or multiple control resource set candidates in the transmission bandwidth. Here, transmission bandwidth implies the active bandwidth partition over which control and/data transmission takes place.

The particular control resource set of the one or more candidate sets to be used can be indicated by RRC signaling or system information. The UE continues to monitor the same control resource set until an update is received by the UE. The update can be indicated by system information or RRC signaling or group-common PDCCH.

The bandwidth partition that the UE is notified to monitor will contain the control resource set that contains the UE specific DCI to signal resource allocation. The control resource set can be located at the center of the bandwidth of the bandwidth partition, the beginning of the bandwidth of the bandwidth partition or at any other location within the bandwidth of the bandwidth partition. System information may notify the UE where the control resource set is located within the bandwidth of the bandwidth partition or how the BW partition is located with respect to the location of the configured control resource set or device specific search space of the UE.

The UE can buffer the data over the entire bandwidth partition and discard any data that is not within the resource allocation defined in the control resource set. Resource block allocation takes place within the bandwidth partition and is indicated by the UE specific DCI signaled within the control resource set.

Resource block allocation within the bandwidth partition can be contiguous or non-contiguous as long as the resource is allocated within the UE bandwidth.

Bandwidth partition assignment options may be equal to or larger than the number of control resource set candidates.

In some implementations, bandwidth partition information is conveyed in a common control message.

The bandwidth partition assigned to different UEs may be
overlapping from the network perspective. The network makes sure resources are allocated in an orthogonal manner when resource blocks within the partitions are assigned.

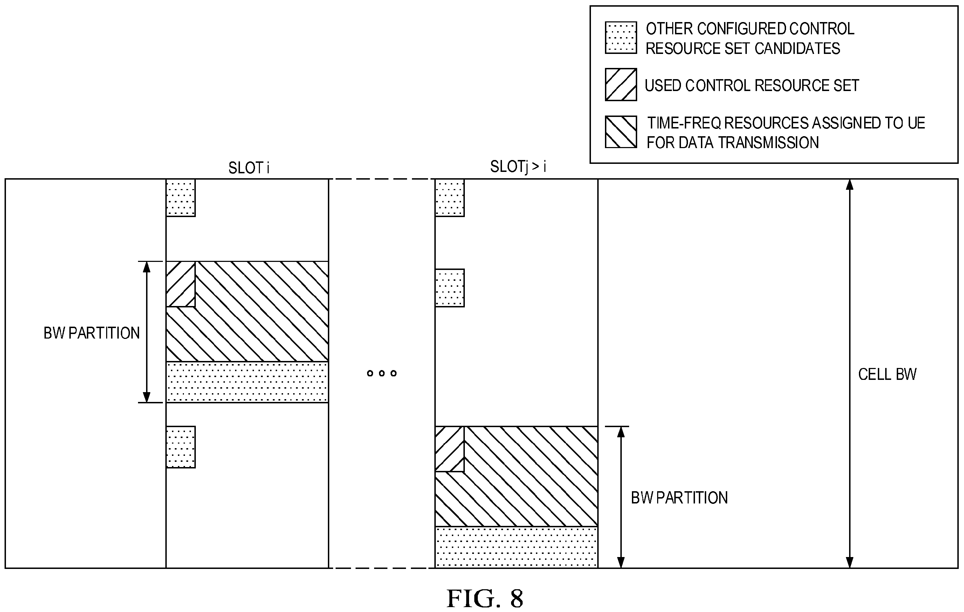

FIG. 8 illustrates an example in which, a control resource set is predefined to be located at a starting edge of the bandwidth of a bandwidth partition and the bandwidth partition has a predefine size that is based on UE bandwidth. For example, the bandwidth partition used can be less or equal to the UE bandwidth. Bandwidth partition size selected/active at a given time can be chosen from a pool of sizes that are based on the UE bandwidth capabilities supported by the carrier/network. Different granularities of bandwidth partition sizes can be supported by the network/carrier and not all of them may be related to UE bandwidth capabilities. For example, network can use a bandwidth partition much smaller than UE bandwidth to reduce DCI signaling overhead. FIG. 8 is a multiple slot resource having a similar arrangement to that of FIGs. 4 and 6. The network notifies the UE where the control resource set is located and based on the notification, the bandwidth of the bandwidth partition begins at that location as well. In other words, the location for a bandwidth partition is implicitly derived from the configured control resource set location. The example of FIG. 8 has the control resource set at the starting edge of the bandwidth partition, but it is to be understood any relationship can be predefined between the location of the control resource set with the bandwidth partition, i.e. the middle of the bandwidth or the trailing edge of the bandwidth.

FIG. 8 also illustrates how a UE can be notified to move to a different bandwidth partition. In some embodiments, RRC signaling can be used to notify the UE. In some embodiments, a pre-defined rule can be used to notify the UE. An example of a pre-defined rule may be that the move to a different bandwidth partition is a function of a slot ID. Another example may be using a UE specific hopping pattern to define the control resource set that the UE will monitor at a given time. Here, it implies that the UE can be configured with a time pattern for bandwidth part switching. For example, the UE can be configured with three control resource set candidates within a numerology. For k slots, it monitors one control resource set, then hops to another control resource set for m slots, then hops to another control resource set which can be different from the previous control resource set. The bandwidth partition moves with change in control resource set that is being monitored by the UE. Alternatively, the bandwidth partitions where the three CORESETs are located may have different numerologies. A UE can monitor one bandwidth partition for n scheduling intervals and then moves to another bandwidth partition.

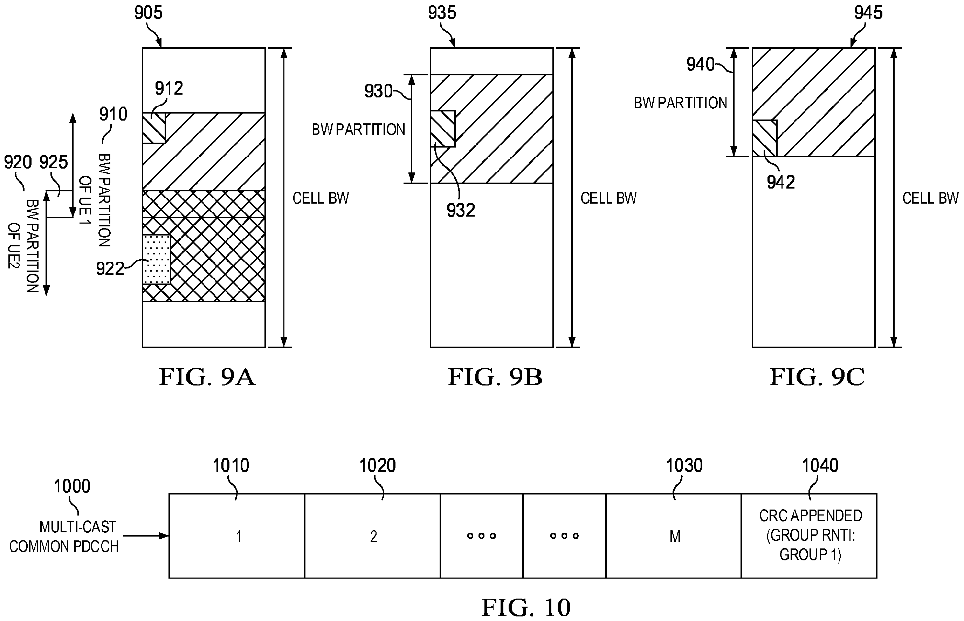

FIGs. 9A, 9B and 9C illustrate several different embodiments for bandwidth partition assignments. FIG. 9A illustrates an example in a single slot 905 where a bandwidth partition 910 for a first UE (UE1) and a bandwidth partition 920 for a second UE (UE2) are overlapping 925. It is up to the base station/network to ensure that in a transmission resource that is shared by multiple UEs, traffic for only a single UE is transmitted on a given overlapping transmission resource. A control resource set 912 for UE1 is at a beginning edge of the bandwidth in a first symbol of the bandwidth partition 910 and a control resource set 922 for UE2 is in the middle of the bandwidth of the first symbol of the bandwidth partition 920. FIG. 9B illustrates an example in a single slot 935 where a control resource set 932 for UE1 is in the middle of ta bandwidth of a first symbol of a bandwidth partition 930 that is different than in FIG. 9A. FIG. 9C illustrates an example in a single slot 945 where a control resource set 942 for UE1 is in the trailing edge of a bandwidth of a first symbol of a bandwidth partition 940 that is different than in FIG. 9A and FIG. 9B.

Bandwidth partitions can be assigned in a UE specific manner or sent to a group of UEs. The size of bandwidth partitions can be a pre-set value. For example, a selection of bandwidth partitions may have bandwidths B1, B2, B3 and B4 for which B4 > B3 > B2 > B1. UEs can be assigned different bandwidth partition sizes depending on the capability of the UE, in particular the UE bandwidth. In one example, the network supports four UE bandwidth capabilities, i.e., B1, B2, B3, B4, and bandwidth partition sizes are based on this. In another example, if the UE bandwidth is B_{UE} and B2 < B_{UE} < B3, then system information or RRC signaling can notify the UE to use B2 as a size of the bandwidth partition.

The location indication for the bandwidth partition can be a pre-configured rule or can be determined implicitly. The bandwidth partition used as the UE bandwidth start location may be a function of a UE ID or a group of UE IDs or a sub-frame (SF) ID. This implies location (starting position and/or size in PRBs) of one or more bandwidth partitions can be implicitly derived from the UE ID/group ID/slot or sub-frame ID and there may not be a separate explicit signaling. For example, if a UE is configured with one or more bandwidth partition and a first numerology, at least one of the configured bandwidth partition based on the first numerology can be obtained from one of the IDs mentioned above, implicitly, or based on a rule. Based on UE ID, UE may follow certain a rule for switching bandwidth partitions. For example, a given UE ID is mapped to a first starting position and first size of a first bandwidth partition based on first numerology. When the UE ID is determined, the UE assumes the corresponding bandwidth partition is active. The UE may move to a second bandwidth partition which has a second starting position and/or second size and/or second numerology, which can be set based on a rule based on UE ID. For example, UE resides in first bandwidth part for a first interval and then switch to the second bandwidth partition for a subsequent interval. It can take place in a periodic fashion.

UEs can be grouped based on their bandwidth capability. For example, UEs within having the same bandwidth can be grouped into the same group. This type of grouping facilitates a group common PDCCH implementation. FIG. 10 illustrates an example of a multi-cast common PDDCH 1000 for transmission to a group of UEs The PDDCH 1000 has N fields in which each of N-1 fields 1010, 1020, 1030 represent a location indication for a bandwidth partition for a particular UE of the group of UEs. The N-1 fields correspond to the total number of UEs in the group. A single field at the end of the PDCCH 1000 is a cyclic redundancy check (CRC) field 1040 based on a Group RNTI that identified the group of UEs. The last field, containing the CRC, is not a physical field, it is a set of bits appended to the information contained within other N - 1 fields. The PDCCH 1000 may be for a group of UEs that all have a UE bandwidth of B1 MHz. The first field 1010 of the PDCCH 1000 is for a first UE, the second field 1020 is for a second UE, the third field is for a third UE, and so on. Each field indicates the location of the bandwidth partition that each UE should monitor within the overall system bandwidth. Similar group common PDCCH can be used for each respective group having for example different UE bandwidths. From system information or higher layer signaling, UE knows the configuration of the group-common message, i.e., how many field, which field to read based on the UE ID etc.

A Group RNTI can be formed, which can be used to identify communications for UEs that are part of the group. During initial access, the UE may be advised of Group RNTIs and corresponding bandwidths and based on the bandwidth of the UE, the UE can be group with an appropriate group. SIB updates can notify UEs of changes in parameters, such as, but not limited to, group common message size, number of fields or mapping changes.

Once the UE is notified of the bandwidth partition the UE is to monitor, which must be the same size or less than UE bandwidth, further control signaling can be used to notify of a change to the bandwidth partition from one scheduling interval to a future scheduling interval, or from one interval to a subsequent interval in general. The further control signaling may include RRC signaling or dynamic signaling. The control signaling can be performed on a UE specific basis or a group basis.

In some embodiments, pre-configured rules can be adopted. A pre-configured amount of shifting of the bandwidth partition may be implemented from one scheduling interval to a future scheduling interval. Shifting from a scheduling interval to another scheduling interval, when desired may be based on sub-frame ID. Shifting of the bandwidth partition may be used for load balancing or randomizing interference. If the UE bandwidth is limited to less than the system bandwidth, the UE cannot simultaneously receive Channel State Information Reference Signals (CSI-RS) that fall outside the bandwidth partition that the UE is monitoring and traffic within the bandwidth partition that the UE is monitoring.

However, there is still an opportunity for the UE to receive CSI measurements outside the bandwidth partition the UE is monitoring. The network sends CSI-RS over the cell bandwidth. When UE is not receiving data, the network can configure the UE to receive CSI-RS over another bandwidth partition. Signaling to configure the UE can be dynamic Layer 1 signaling (i.e. UE specific or group common PDCCH) or higher layer signaling (RRC or SIB). This implies the UE may switch to other configured bandwidth partitions, different from the current active bandwidth part, to receive CSI RS which is necessary for channel measurement from serving or neighbor cell(s) and also more mobility.

The UE may be configured with multiple control resource set candidates that are spread out over the cell bandwidth. CSI-RS is sent with a defined periodicity. The network can notify the UE, if there is a limitation on the bandwidth capability, to monitor one control resource set during an interval when CSI-RS is sent. In some later interval when CSI-RS is sent, the UE can be configured to use another control resource set. This implies the UE monitors CORESET in the bandwidth partition to which the UE switch to receive CSI RS. This mechanism will allow the network to monitor link qualities of the UE over the cell bandwidth with a periodicity, based on feedback from the UE on link quality measurements. The network can exploit this information and notify the UE, dynamically or semi-statically, to use a particular control resource set where it is observing a better channel quality based on previous measurements.

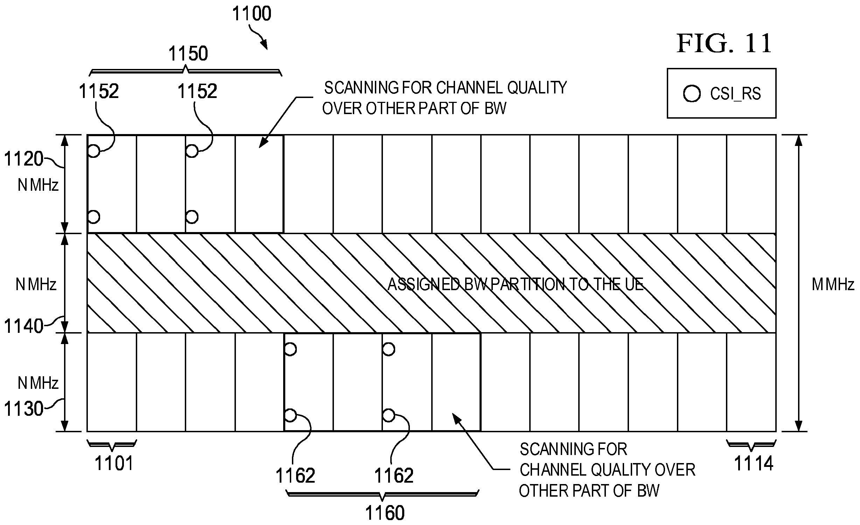

FIG. 11 illustrates a multi-scheduling interval 1100 that has a system bandwidth of M MHz. There are 14 scheduling intervals 1101 to 1114. The multi-scheduling interval 1100 is partitioned into three bandwidth partitions 1120, 1130, 1140, each having a bandwidth of N MHz. The UE bandwidth is also N MHz. Bandwidth partition 1140 is allocated to the UE, but not all of bandwidth partition is used for control information or data. Resource 1150 occupying the first four scheduling intervals of bandwidth partition 1120 has four reference signals (RS) 1152, specifically in the first and third scheduling intervals. Resource 1160 occupying the second four scheduling intervals of bandwidth partition 1130 has four RS 1162, specifically in the fifth and seventh scheduling intervals. If the UE is not monitoring for control information or data when the RS 1152, 1162 are transmitted, the network can signal the UE to tune to other bandwidth partitions to monitor the RS. The CSI-RS pattern shown here is only for an example. Similar to LTE, CSI-RS can be transmitted in every resource block in the frequency domain with some periodicity in time.

Being able to monitor the CSI-RS can help the network decide which bandwidth partition may be best for the UE at a given time. Therefore, the network can decide to switch the current bandwidth partition to another location in a subsequent scheduling interval if there is less interference, or for load balancing.

When the UE operates in a manner that it is always buffering the bandwidth partition based on the size of UE bandwidth, the UE may not be operating in a power saving mode, as it always has to buffer a larger bandwidth. When the bandwidth partition indication comes together the PRB allocation in the same DCI, then the UE only monitors the bandwidth of the control resource set at the beginning of the slot.

Even though the examples mentioned above correspond to slot-based operation, it is understood that it can be applicable to a scheduling interval of a length different than a slot, for example, a mini-slot. For a mini-slot, it may or may not be possible to indicate the bandwidth partition dynamically together with resource allocation, because the UE may not have enough time to tune to a different RF bandwidth during the duration of the mini-slot. If it is not possible, then the bandwidth partition indication has to be notified before, either dynamically or semi-statically. The mechanisms mentioned above to notify the bandwidth partition apply here as well.

A group-common PDCCH can be observed at mini-slot granularity or slot granularity or a group of slot granularity. Different group-common PDCCHs may have different monitoring period. One UE can monitor one or multiple group-common PDCCHs.

### FDM Multiplexing of Numerologies

The following discussion pertains to FDM multiplexing of numerologies.

There are several underlying basis that are considered when applying FDM multiplexing of numerologies. Firstly, multiple numerologies can coexist in a system. Secondly, a UE can support one or multiple numerologies. Thirdly, whether a UE can receive data simultaneously over multiple numerologies. Fourthly, initial access may occur for a UE on a default numerology known by the network and the UE.

Resources configuration for each numerology can be notified by a system information block (SIB), for example SIB1, group common PDCCH using a Numerology specific RNTI, or RRC signaling or some combination thereof over time.

When dealing with an FDM multiplexing of numerologies, a first step is to define the numerology allocation for the UE and then resource allocation for each respective numerology may be treated in a similar manner as was described above for a single numerology. This implies providing the UE with bandwidth partition configurations based on the numerologies supported by the UE. The bandwidth partitions of different numerologies can coexist in FDM fashion, either in overlapping or non-overlapping manner.

In some implementations, the UE monitors system information sent in the default numerology. If the UE supports multiple numerologies, it can be assumed that UE supports the default numerology.

In another embodiment, all of the numerologies that are available can be used for initial access. In that case, synchronization sequence, master information and/or SIB1 can appear in the resources for all numerologies. Some system information can be sent in the resources configured for each numerology, regardless of whether initial access is supported for that numerology or not.

In a first example implementation, within a configurable period, system information, i.e. SIB, is sent in the default numerology containing resource or sub-band configuration details, or both, of at least two numerologies. In some embodiments, in a system information block (SIB), such as SIB1, a bitmap can be used to identify a sub-band configuration of a given numerology. In other embodiments, pre-configured sub-band sizes are supported. The SIB notifies the size and location of sub-band that is being used for a given numerology. One or multiple sub-bands may be associated with a numerology. For example, one sub-band at each edge of the system BW can be allocated to a common numerology. SIB1 can contain some identifier to convey resource configuration information of different numerologies. SIB1 can provide numerology association or other related indication to UEs. Alternatively, numerology indication/association can be obtained as part of other information/processes during initial access, for example, master information block.

In a second example implementation, layer 1 (LI) signaling is sent in the default numerology. One example of the LI signaling may be a group-common PDCCH. One group common message may be sent for each numerology. UEs that support multiple numerologies can monitor a numerology specific RNTI to determine the location of sub-band that includes the location and/or size indication. A multi-cast common PDDCH may include multiple fields in which each field in the PDCCH represents a location and/or size indication for the bandwidth partition for a particular UE of a group of UEs. The total number of fields corresponds to the total number of UEs in the group. In a particular example, the first field is for a first UE in the group having a sub-carrier spacing of 15 kHz, the second field is for a second UE having the same sub-carrier spacing, the third field is for a third UE having the same sub-carrier spacing, and so on. The last field can be a cyclic redundancy check field based on the numerology specific RNTI. Each field indicates the location of the sub-band that each UE should monitor within the overall system bandwidth. Similar group common PDCCH can be used for each respective sub-carrier spacing group.

In another implementation, a group-common PDCCH checked by a numerology specific RNTI only contains the sub-band configuration details of that numerology. UEs supporting that numerology will check the corresponding common PDCCH with a configurable period. A sub-band configuration field may have T bits. In one example, T can be a bitmap based on a bandwidth allocation unit or chunks combination of bandwidth allocation units. The bandwidth allocation units can be contiguous or non-contiguous. In another example, T bits can include multiple fields which collectively indicate where the sub-band starts, the size of the sub-band, etc. In another example, T bits are used to indicate sub-band size and location from a pre-configured set of values, which are chosen by higher layer.

System information can notify the UE of the numerology that the UE is configured for. It may be possible that RRC signaling can be used to configure and/or update a numerology associated with a UE. For example, even if the UE can support multiple numerologies and/or is initially configured for multiple numerologies, RRC signaling or system information can notify the UE of an update of numerology association and/or configuration of the UE. It may be possible that RRC signaling or a group-common PDCCH notifies the UE not to monitor the control resource set for a given period of time. Similarly, even if the UE was initially configured or associated with one numerology, RRC signaling or system information or a group-common PDCCH can notify the UE whether it is configured with any other numerology.

In some implementations, the UE can potentially monitor for the L1 signaling every sub-frame. In some implementations, the UE can be configured to periodically monitor group common PDCCH for a numerology resource allocation.

In a third example implementation, RRC signaling can notify the UE of the numerology resource configuration setup and update the numerology resource configuration setup as appropriate. The RRC signaling can be conveyed when the UE is receiving data over the default numerology or in an alternate numerology authorized by the network.

The system bandwidth can be divided into fixed sized resources for use with different numerologies. Groups of the fixed sized resources can be allocated to sub-bands to be used for different numerologies. The fixed sized resources can be grouped in a contiguous manner or a distributed manner.

In one implementation, the sub-band sizes are based on or equal to the bandwidth of the group of PRBs of a default numerology or any other given numerology. In one option, the sub-band size can be based on or equal to the bandwidth of the group of PRBs of the numerology or sub-carrier spacing it is associated with. The bandwidth allocation units, discussed above, that constitute the sub-band can be based on or equal to the bandwidth of a PRB or a group of PRBs of the default numerology or any given numerology. The chosen set of values for sub-band sizes takes this into account. In another embodiment, the sub-band sizes are not related to the bandwidth of a group of PRBs.

However, in some embodiments, instead of dividing the system bandwidth into fixed sizes resources, it may be possible to divide the system bandwidth into resources that are not the same size.

Sub-band configuration of a numerology can be updated as frequently as every scheduling interval. Alternatively, the UE can be configured to update the sub-band configuration of numerology based on some other periodicity.

In semi-static resource allocation, first one or multiple sub-bands are configured to carry data based on a particular numerology. Then PRBs are allocated within the configured one or multiple sub-bands for that numerology. If the UE bandwidth is less than the configured sub-band bandwidth, then previously discussed methods of bandwidth partition indication for a single numerology can apply here as well, i.e., an intermediate step notifies the bandwidth partition before PRB allocation or bandwidth partition indication can be performed jointly with PRB allocation, similar to one case of dynamic resource allocation mentioned above.

Some pre-configured patterns for dividing the system bandwidth can be used to avoid having to signal the manner of dividing the system bandwidth on a per scheduling interval basis.

It may be possible to use the similar patterns for different bandwidth choices, e.g., 10, 20, 100 MHz etc. Alternatively, different patterns may be used for different bandwidth choices.

One or multiple control resource sets can be semi-statically configured per UE, depending on whether the UE can support and/or receive data over one or multiple numerologies. The UE either simultaneously monitor control resource sets in different numerology sub-bands or monitor control resource sets over a single numerology at a time. This implies that the UE can monitor one or more CORESETs based on the numerology of a sub-band/bandwidth partition, and UE may monitor CORESETs in multiple sub-bands simultaneously where the sub-bands can be based on different numerologies.

Within one sub-band using a particular numerology, one or multiple control resource set candidates can be configured for a UE. Such a process is similar to that described for the single numerology case, for example referring to the description of slot i+1 of FIG. 4.

In some implementations, the control resource set configuration, which can be a UE-specific search space, is signaled to the UE via RRC.

RBs are then allocated within the sub-band associated with the particular numerology. This process may be similar to the resource block allocation described above for the single numerology case.

If the UE bandwidth is less than the sub-band bandwidth configured for a given numerology, similar methods as described above for a single numerology may be applied. For instance, a bandwidth partition indication within the sub-band being used for a given numerology can be configured dynamically or semi-statically. When performing resource block allocation using a resource block bitmap, the resource block bitmap can be a function of sub-band bandwidth or a bandwidth partition. This may depend on the size of the UE bandwidth in relation to the size of the sub-band bandwidth or system bandwidth.

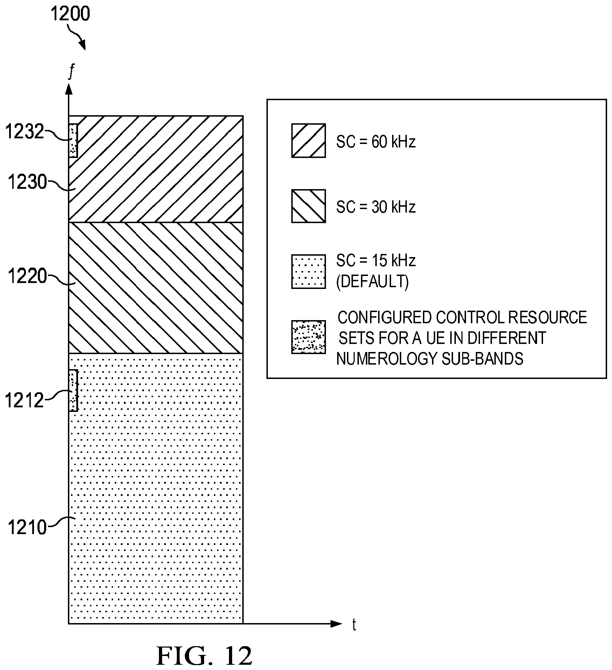

FIG. 12 illustrates an example of an FDM multiplexing of numerologies in a single scheduling interval or in a time interval in general 1200. The horizontal axis again represents the time domain and the vertical axis represents the frequency domain. In the scheduling interval there are three regions that each supports a different numerology. A first numerology region 1210 supports a first numerology for which one of the parameters of the first numerology is a sub-carrier spacing of 15 kHz. This first numerology is considered the default numerology, which can be used for initial access and other instances where a default numerology is needed. A second numerology region 1220 supports a second numerology for which one of the parameters of the second numerology is a sub-carrier spacing of 30 kHz. A third numerology region 1230 supports a third numerology for which one of the parameters of the third numerology is a sub-carrier spacing of 60 kHz. FIG. 12 represents a scenario in which a UE is allocated use of the first and third numerologies. Therefore, first numerology region 1210 and third numerology region 1230 include control resource sets 1212, 1222 for the UE defining the resource allocations for the respective numerology regions 1210,1230. Note that from a UE perspective, monitoring a period of common and/or UE-specific control resource sets can be different for the different numerologies that the UE can support or is configured with.

Dynamic resource allocation can be implemented for two scenarios. A first scenario pertains to control information and data being transmitted using the same numerology. A second scenario pertains to control information and data being transmitted using different numerologies.

Dynamic resource allocation can be used within the cell bandwidth for some or all of the remaining symbols in the slot or sub-frame. Control information and data can coexist in a TDM manner, an FDM manner or a combine TDM and FDM manner.

The network can semi-statically configure the numerology resource partitions to contain control resource sets of different UEs.

Logical partitions of resources can be configured semi-statically. The logical partitions can be allocated to different numerologies.

Some logical resource partitions are configured to contain control resource sets of different numerologies. For example, a control resource set within a numerology of a set of numerologies can be monitored every N symbols, where N ≥ 1 symbol. The value of N could be different for different UEs.

The periodicity of PDCCH monitoring can be configurable for different UEs. For example, a first UE supported by 30 kHz numerology may monitor for control information every 0.25ms scheduling interval, which includes 7 symbols. A second UE supported by a same numerology may monitor for control information every 0.5ms or 14 symbols.

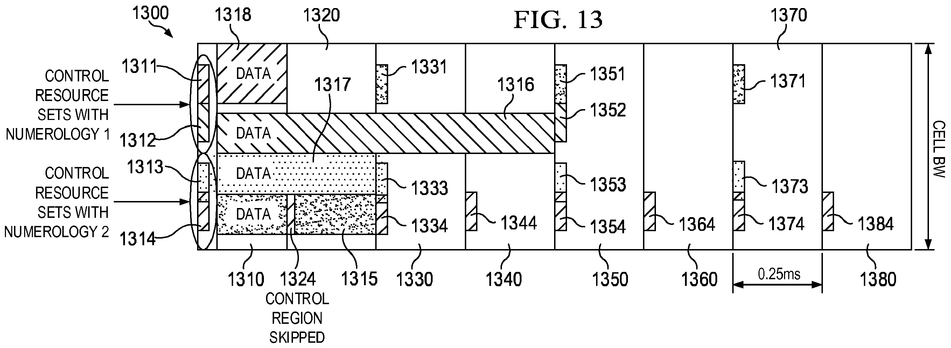

FIG. 13 illustrates an example of an FDM multiplexing of numerologies in a multi-scheduling interval resource 1300.The multi-scheduling interval resource 1300 includes eight scheduling intervals, or slots, each slot being 0.25 milliseconds (ms) and having 7 symbols. Four UEs are being sent control information and data. Two numerologies are being used. UE1 and UE2 are allocated to a first numerology and UE3 and UE4 are allocated to a second numerology. A control resource set 1311, 1331, 1351, 1371 for UE1 is sent every 0.5 ms. A control resource set 1312, 1352 for UE2 is sent every 1.0 ms. A control resource set 1313, 1333, 1353, 1373 for UE3 is sent every 0.5 ms. A control resource set 1314, 1324, 1334, 1344, 1354, 1364, 1374, 1384 for UE4 is sent every 0.25 ms. The resources for control resource sets for UE3 and UE4 overlap, so it is up to the network to ensure that control information is conveyed in non-overlapping manner. For example, the every second control resource set 1324, 1344, 1364, 1384 can use a larger portion of the allocated control resource as no control information for UE3 is being sent at those times.

The control resource set 1311 includes location information for the resource allocation for UE1. The data 1315 is shown in the allocated resource over slots 1310 and 1320. UE4 may be notified to skip the control resource set 1324 as data for UE1 is being transmitted at that time and if UE4 does monitor that location it will only receive noise from its perspective. In another embodiment, the network controls transmission of the data for UE1 to avoid the control region of UE4.

The control resource set 1312 includes location information for the resource allocation for UE2. The data 1316 is shown in the allocated resource over slots 1310, 1320, 1330 and 1340. The control resource set 1313 includes location information for the resource allocation for UE3. The data 1317 is shown in the allocated resource over slots 1310, and 1320. The control resource set 1314 includes location information for the resource allocation for UE4. The data 1318 is shown in the allocated resource over slots 1310.

As can be seen from FIG. 13, resource allocation for data transmission can occur over a bandwidth that is different from the bandwidth where the control resource set was monitored. Similar to the cases discussed above for dynamic resource allocation for single numerology, here dynamic bandwidth partition indication or resource allocation occurring over a second RF bandwidth other than the RF bandwidth that contained the control resource set may require the UE time to tune to the second RF bandwidth where resource allocation takes place.

The amount of time it takes to tune to the second RF bandwidth from a first RF bandwidth may depend on the UE capability.

For the scenario in which control information and data utilize the same numerology and data can be allocated anywhere within the cell BW, there is no semi-static association of sub-band to numerology for the data transmission. Sub-band association to a numerology is dynamically configured. It may be possible that several non-contiguous sub-bands carry data of same numerology.

The control information is in pre-configured locations of the scheduling interval, but dynamic resource allocation enables data to be scheduled anywhere within the system bandwidth, unless there is UE bandwidth or overhead restriction.

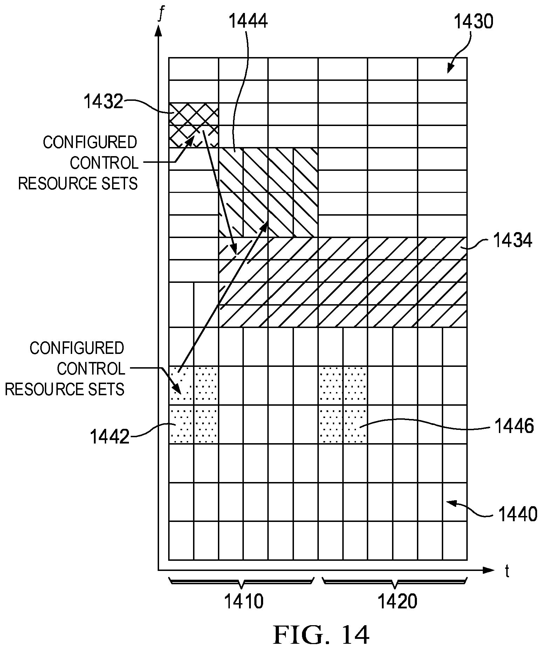

FIG. 14 illustrates an example in which the control information and data utilize the same numerology. FIG. 14 includes two scheduling intervals 1410 and 1420. Two different numerologies are used. A first numerology is used for control information and data for a first UE UE1 and a second numerology is used for control information and data for a second UE UE2. The first numerology is allocated to a first region 1430, which is shown with resource blocks that are longer in the horizontal (time domain) direction than the vertical (frequency domain) direction. The second numerology is allocated to a second region 1440, which is shown with resource blocks that are shorter in the horizontal (time domain) direction than the vertical (frequency domain) direction. A control resource set 1432 transmitted using the first numerology includes information allocating the resource for transmitting data 1434 for UE1 in the first scheduling internal 1410. A control resource set 1442 transmitted using the second numerology includes information allocating the resource for transmitting data 1444 for UE2. A control resource set 1446 is also shown in the second scheduling internal 1420. As can be seen the same numerology (longer in the time domain than the frequency domain) is used for both the control resource set 1432 and the data 1434 for UE1. Likewise, the same numerology (shorter in the time domain than the frequency domain) is used for both the control resource set 1442 and the data 1444 for UE2. Even though not shown in the figure, the UE may need time to tune to the second RF bandwidth where data is located if the UE bandwidth is less than the cell bandwidth or a sub-band or the bandwidth over which the PDCCH can map the PRBs. If the UE bandwidth is not limited, the UE can buffer the entire cell bandwidth or a large portion of the bandwidth and then discard the unwanted portion. As a result, the UE may not have to wait between receiving control information and data. FIG. 14 illustrates an example where configured control resource sets for a given numerology can indicate resource allocation anywhere within the cell bandwidth for that same numerology for a scheduling interval. The scheduling interval can be of any duration, for example, slot, mini-slot, or group of them.

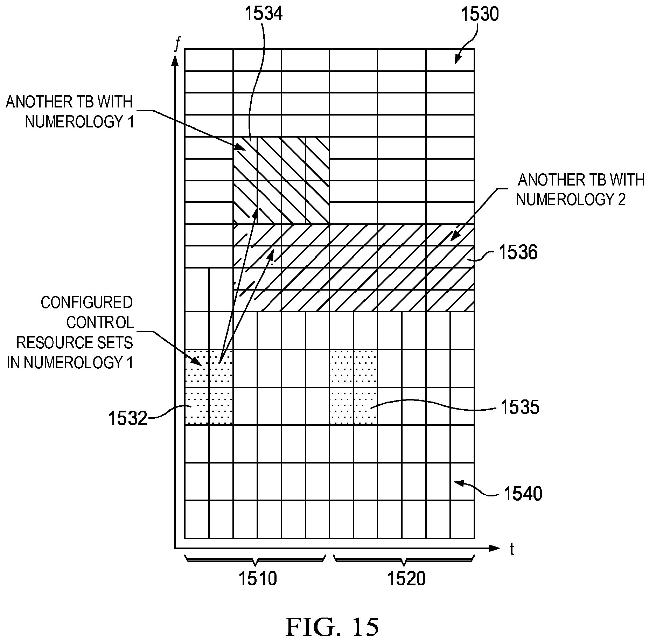

FIG. 15 illustrates an example in which the control information and data utilize both the same and different numerology. Here, the control resource set is configured with a given numerology. Data can be allocated with the same or different numerology. When two numerologies are used, data of one numerology can span a longer interval than the other numerology. Even for UEs supported by same numerology for data transmission, data or transport block transmission of different UEs can span different intervals. Different UEs can monitor the control resource set with different periodicity. FIG. 15 includes two scheduling intervals 1510 and 1520. Two different numerologies are used. A first numerology is used for control information and a first portion of data for UE1 and a second numerology is used for a second portion of data for UE1. The first numerology is allocated to a first region 1530, which is shown with resource blocks that are longer in the horizontal (time domain) direction than the vertical (frequency domain) direction. The second numerology is allocated to a second region 1540, which is shown with resource blocks that are shorter in the horizontal (time domain) direction than the vertical (frequency domain) direction. A control resource set 1532 transmitted using the first numerology includes information allocating the resource for transmitting data of TB 1534 using the first numerology and transmitting data of TB 1536 using a second numerology for UE1. A control resource set 1538 is also shown in the second scheduling internal 1520. In this example, UE receives control signaling for resource allocation of multiple TBs in same DCI. In FIG. 15, the two TBs based on different numerologies are assigned different time-frequency resources as they are transmitted based on different numerologies. Here, it is implied that UE may require multiple bandwidth partitions active for data transmission of different numerologies. In one example, after receiving the control, the UE activates a second RF chain to tune to one of the bandwidth partition used for transmission of one of the TB. Alternatively, UE receives both transmission in same RF bandwidth within UE capability. Filtering is needed at the UE receiver to separate transmission of different numerologies received over different bandwidth partitions. Even though it was shown that 1532 and 1534 are in different frequency resources, more generally, they can be in any frequency resources, e.g., 1532 and 1534 can be in same frequency resources. In one example, UE may not need to change bandwidth partition where control is received for at least one of the TBs that is received with the same numerology as the control.

In another example, UE may receive multiple TBs for which resource allocation is conveyed in same scheduling DCI/PDCCH. The resources assigned for the TBs can be allocated in FDM manner or TDM manner with same or different numerologies. In a first example, a latency sensitive TB (first TB) and latency tolerant TB (second TB) may be time-multiplexed. In this case, the DCI may indicate a common frequency domain resources (e.g., the PRBs) that is used for transmission of both TBs. DCI indicates starting position (e.g., the location of the symbol after control is received) of the first TB and/or length of transmission in terms of symbols for the first TB and/or starting position of the second TB (e.g., the location of the symbol after 1st TB is received) and/or length of transmission in terms of symbols for the second TB. This is assuming both first and second TBs are transmitted with same numerology and same bandwidth partition. If they are transmitted with same or different numerologies in different bandwidth partitions, UE may need to switch to a different bandwidth partition to receive one of the TBs. In this case, the scheduling DCI would indicate the bandwidth partition information other than the bandwidth partition where control is received. In case of MIMO transmission, TDM multiplexing of TBs may take place in each layer, i.e., for a first interval, a first TB is transmitted over the layers, and for a subsequent second interval, a second TB is transmitted over the layers. In this case, same frequency resource in a bandwidth partition can be used. The DCI only indicate the starting position and/or length of transmission of each TB. Multi-antenna information can be same or different for the TBs. For example, precoder matrix information, power offset, DMRS port etc. can be indicated separately for the TBs or they can be same. In one example, time-dependent multi-antenna information may be conveyed. Such as for first N symbols (e.g., for transmission of first TB), use a first set of parameters, and for a second P symbols, (e.g., for transmission of second TB), use a second set of parameters. In one example, N + P = scheduling interval or data transmission duration indicated in the DCI. Other parameters include one or more of NDI (new data indicator) bits for packets indicated, and, HARQ process ID indication, etc.

### TDM Multiplexing of Numerologies

The following discussion pertains to TDM multiplexing of numerologies.

For the scenario of TDM multiplexing of numerologies, each scheduling interval can be treated as if handling a single numerology region. Therefore, in a similar fashion as discussed above in the section describing single numerology, the UE can be configured using one or multiple control resource sets within the scheduling interval.

Pre-configured locations for the control resource set can be identified to the UE for each numerology. SIB, for example SIB1 sent in default numerology, or RRC signaling can inform the UE which control resource sets to monitor (i.e., which numerology to use for data reception) for a given scheduling interval.

In a semi-static configuration, SIB, for example SIB1, sent in a default numerology, or an RRC message, can notify the UE the numerology that will be used for a given time duration. In that case, the UE only monitors the configured control resource for the numerology that is being used for transmission. Based on conveyed semi-static configuration, the UE can the monitor control resource set of other numerologies in a subsequent interval.

In another embodiment, after the UE is configured with multiple control resource sets, of which at least one is configured for each numerology, the UE can blindly monitor the control resource sets configured for a SS different numerology. This can apply to dynamic resource allocation where the UE blindly detects which numerology is used to send the PDCCH. In a TDM implementation, only one of the control resource sets corresponding to a numerology may contain PDCCH information, at most. Whereas in FDM, the control resource sets of multiple numerologies may contain separate PDCCH information, in case the UE supports simultaneous TB transmission over different numerologies.

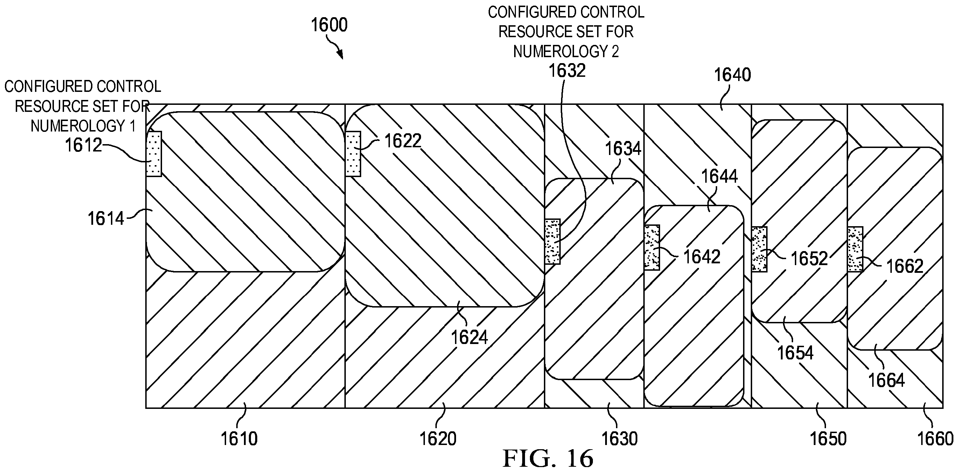

FIG. 16 illustrates an example of a TDM multiplexing of numerologies. FIG. 16 includes a resource 1600 including six scheduling intervals 1610, 1620, 1630, 1640, 1650, 1660, the first two scheduling intervals 1610, 1620 use a first numerology and the last four scheduling intervals 1630, 1640, 1650, 1660 use a second numerology. Each of the six scheduling intervals 1610, 1620, 1630, 1640, 1650, 1660 has a respective configured control resource set 1612, 1622, 1632, 1642, 1652, 1662 for allocating the resources to a UE. Data 1614, 1624, 1634, 1644, 1654, 1664 is transmitted in the allocated resource defined in the control resource sets 1612, 1622, 1632, 1642, 1652, Y62.

In the same way that the use of a single numerology may include semi-static and dynamic signaling for each of the bandwidth partition indication and the resource block allocation, each of the scheduling intervals having a single numerology in the TDM multiplexing of numerologies can use semi-static or dynamic signaling for the bandwidth partition indication and the resource block allocation.

For TDM of numerologies, default numerology resources will occur at least at the periods of PBCH and/or SSB transmission. The UE will be configured, i.e., to get the UE ID and system information, during an interval when default numerology is used. System information can configure the UE with one or more control resource set candidates. The UE can be configured with one or more UE specific control resource set candidates for each numerology. In another embodiment, the UE is configured with UE specific control resource sets in the default numerology only. Dynamic data allocation can occur in a default numerology or other numerologies supported by the UE. For example, at the beginning of a sub-frame or a time duration, or a frame in general, there are can be a few symbols with the default numerology which contain the control resource sets for different UEs. Based on the control information received in the default numerology, UEs receive data in a different numerology in subsequent symbols. In a particular example, the control resource set is configured at the beginning of 1 ms sub-frame. Two symbols based on a 15kHz default numerology at the beginning of the sub-frame contain the control resource sets. In the rest of the duration of the sub-frame, skipping some time for tuning to a different RF bandwidth if needed, UEs receive data in one or multiple numerologies they support. Some symbols based on 15kHz, 30kHz and/or 60kHz can be placed next to each other in TDM fashion within the sub-frame.

If a UE can receive data over multiple numerologies, the UE will be configured with at least one control resource set for each numerology, especially when control and data has to be sent with the same numerology. The UE can monitor the control resource sets of the numerologies it supports. Control resource sets of different numerologies can be monitored at the same or different time periods. For example, if a UE supports both eMBB and URLLC where eMBB data is sent with 15kHz and URLLC data is sent with 60kHz, it may monitor the control resource set for the 60kHz numerology more frequently than the control resource set configured for 15kHz numerology. In this particular example, the control resource set for the 60kHz numerology can be monitored every 0.125ms or 0.25ms, whereas for the 15kHz numerology the control resource set is monitored every 1ms.

From the system information or common control resource set observed in the default numerology resources, UEs may know semi-static resource configuration of numerologies, if resources are assigned to numerologies in semi-static manner. For example, semi-static resource partitioning in time can be obtained for numerologies. From system information, the UEs know when resources are assigned for which numerology. UE can go to sleep or idle mode if it needs to wait for the assigned resources to come for a given numerology it supports, in addition to default numerology.

If dynamic resource allocation is assumed, the UEs monitor the control resource sets for each numerology they support. UEs blindly detect from the control resource sets whether at a given time, one or multiple numerologies are used to send data. If a UE support multiple numerologies but can only receive over one numerology at a time, it can blindly detect which control resource set of a numerology contains the DCI. Same as before control resource sets of different numerology can be monitored with different periods. Blind detection of control resource sets of multiple numerology may be required by the UE if their monitoring instances align. For example, if a UE supports 15kHz and 60 kHz, it can be configured to monitor control resource set of 15kHz every 1ms, whereas it can monitor control resource set of 60kHz every 0.125ms. Note that the timing mentioned here is only an example, other values are possible. How frequently the UE monitors the control resource set of different numerologies is configured by higher layer. It can be notified via system information, for example SIB1, or RRC signaling.

Similar to the example mentioned above, a scheduling DCI may indicate resource allocation of more than one TB in TDM manner where the TBs are assigned resources in same or different numerologies. If different numerology, the UE needs to switch to a different partition. In one example, UE receives a scheduling DCI and one TB in a first bandwidth partition based on a first numerology and then UE switches to a second bandwidth partition based on a first or second numerology to receive a second TB indicated in the scheduling DCI.

In one example, the UE receives a DCI with an indication of a second bandwidth partition and the DCI is received in a first bandwidth partition. The DCI provides resource allocation of a TB in either first or second bandwidth partition. In one example, if the TB is assigned resources in the first bandwidth partition, the UE may switch to the second bandwidth partition after the TB is received in the first bandwidth partition. This may be useful for latency sensitive traffic.

In some implementations, RRC signaling or the group-common PDCCH notifies the UE not to monitor the control resource set of a numerology for a given period of time. Similarly, even if the UE was initially configured or associated with one numerology, RRC signaling or system information or group-common PDCCH can notify the UE whether it is configured with any other numerology.

Some or all of the methods are applicable to both UL and DL. The same or different BW partition sizes or set of sizes can be configured for DL and UL transmission. Bandwidth partitions configured for UL can be separately obtained, i.e., may not be related to DL bandwidth partition configuration. The PDCCH that provides UL grant can contain bandwidth partition information and/or PRB allocation. Multiple bandwidth partitions can be configured for UL transmission of a UE, depending on its capability.

As shown above, resources configuration for each numerology can be notified by a system information block (SIB), for example SIB1, group common PDCCH using a Numerology specific RNTI, or RRC signaling or some combination thereof over time. Alternatively, numerology can be dynamically indicated in the control message. The control message can be of same or different numerology from data channel.

RRC signaling only notifies the control resource set for the UE and numerology indication may or may not be indicated together with the indication of the control resource set configuration. Numerology can be indicated by RRC or SIB or by DCI or by MAC CE.

A first UE is configured with a first numerology and a first bandwidth partition, and a second UE is configured with a second numerology and a second bandwidth partition. In some examples, first and second numerologies are the same. In some examples, first and second numerologies are different. The network can configure first and second bandwidth partitions in non-overlapping manner or overlapping manner and either of same or different sizes. In the following, the overlapping issues will be discussed. The network can re-configure or change bandwidth partitions via RRC or MAC CE or DCI signaling.

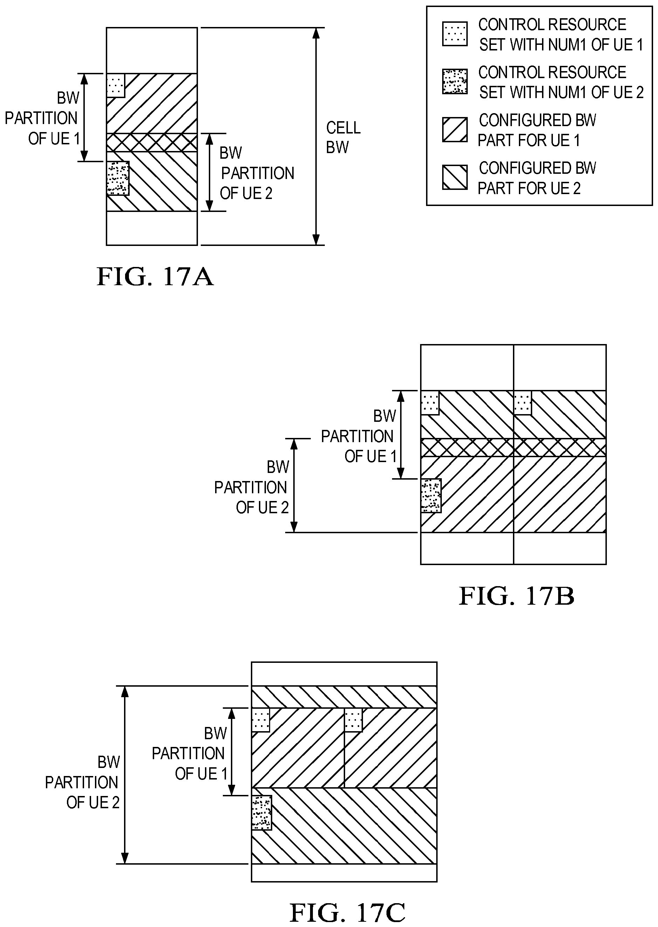

In an overlapping manner, two or more bandwidth partitions can have a common part. The common part can be dynamically assigned to either of the partitions for data transmission. A bandwidth partition can contain data and/or control. In Figure 17a, there is an example of UE1 configured with bandwidth partition 1 with numerology 1 and UE 2 with bandwidth partition 2 with numerology 2. The bandwidth partitions are shown to overlap. The bandwidth partitions also contain control resource sets. During scheduling, the network ensures resource assignment is orthogonal, i.e., the common part is used in orthogonal manner. As another example, the common part can be used by both UEs in a non-orthogonal data transmission.

In Figure 17b, there is another example where UE 1 is configured with a more frequent control monitoring interval than UE 2. In Fig. 17b, the UEs are shown to have different numerology. In an alternative example, it is possible that both UEs have same numerology but different control monitoring interval. Fig. 17b shows partial overlap of the configured bandwidth partitions. Fig. 17c shows a case where bandwidth partition of UE2 fully overlaps with that of UE1.

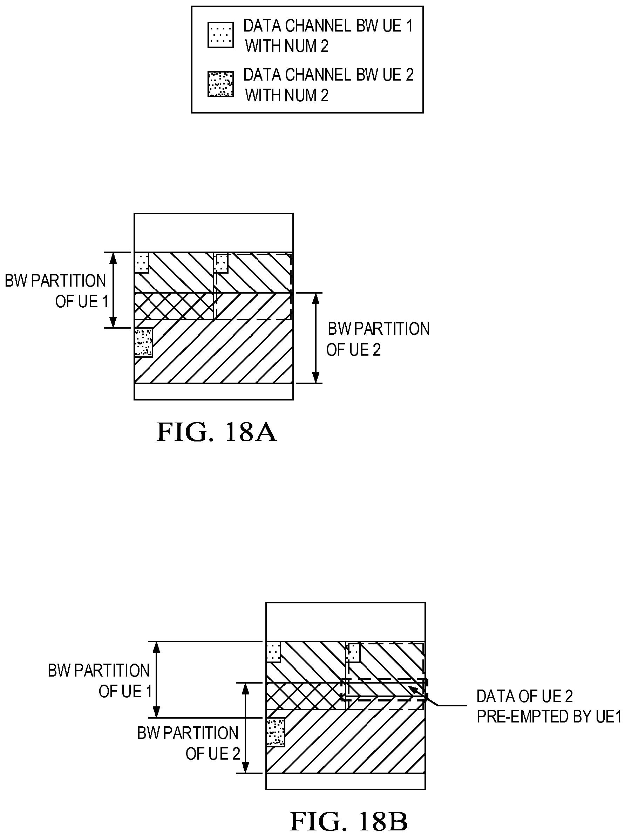

For overlapping cases, the control monitoring interval designs can be described with following examples. In Figure 18, two examples are given where UE 1 and UE 2 have different control monitoring interval. Note that scheduling interval duration can be shorter, same or longer than control monitoring period. In Fig18, the SCS of numerology 1 is larger than the SCS of numerology 2. Data transmission based on numerology 2 can have longer scheduling interval than numerology 1.

In Fig. 18a, UE 2 is allocated data within its configured bandwidth partition but UE1 does not receive any data. The network schedules UE 2 including the common part that is overlapped by both the partitions. In the next interval of UE 2, data arrives and UE2 is scheduled to avoid the common part. In Fig. 18b, an example is shown where the network schedules resources to UE 2 within its bandwidth partition by pre-empting a portion of the resources previously assigned to UE2. UE 2 is signaled of the pre-emption information either during the impacted interval or after the impacted interval. The signal that contains the pre-emption indication can be sent in a PDCCH or PDCCH-like channel. Here, PDCCH-like channel refers to a channel that can use PDCCH structure. The PDCCH channel containing the pre-emption indication can be in the PDCCH region of a slot or outside the PDCCH region, e.g., in the PDSCH region. The indication can be sent with the same numerology as the data channel or in a different numerology.

When a UE is configured with one bandwidth partition and multiple numerology, one control resource set can include resources assignment for multiple numerology within the bandwidth partition. In one example, bandwidth partition can be equal or less than the carrier bandwidth.

In one example, the UE is configured with a control resource set with a given numerology. If the UE supports multiple numerology, the control information transmitted with a first numerology can indicate both resource assignment and numerology for data transmission. The numerology used for data transmission can be the same or different from the numerology of the control channel. Multiple numerology can be used for data transmission within the bandwidth partition. Transmission of one transport block may or may not span resources of multiple numerology.

In one example, the PDCCH message can have a numerology indication field. How many numerologies are supported can be configured by higher layer. The PDCCH message indicates which numerology being used and what is the resource allocation, e.g., PRBs, within the bandwidth partition for this numerology. A UE can receive multiple PDCCH message in the control resource set. Each PDCCH message can be used for resource allocation of one numerology. PDCCH message may be transmitted with same or different numerology than the numerology used for data transmission.

In another example, a single PDCCH message transmitted with a given numerology can indicate resources assignment for multiple numerology. The PDCCH message can have separate resource allocation fields for each numerology it indicates.

In another example, the PDCCH message can indicate scheduling interval length for the resource assignment of each numerology. In another example, the length may not be dynamically indicated and it is informed via higher layer signaling, e.g., RRC.

In one example, the PDCCH message sent with first numerology can indicate a second numerology and resources assignment for that second numerology; in addition it can indicate a third numerology and resources assignment for that third numerology. The resource assignments can take place in TDM and/or FDM manner. Second numerology can be same as first numerology.

In one example, bandwidth partitions, where data transmission takes place, are dynamically indicated in the PDCCH message. The PDCCH message is sent in another bandwidth partition which can be the same or different from the bandwidth partition assigned for data transmission. Two UEs monitoring control resource set at the beginning of a time interval, can have bandwidth partition assigned in the DCI in overlapping or non-overlapping manner. PRBs are allocated in a manner that data transmission of two UEs do not overlap.

In addition to numerology indication for a data channel, CSI-RS numerology is also indicated to the UEs. CSI-RS numerology may be indicated to the UEs via system information or RRC signaling or MAC CE.

In one example, the UEs are indicated CSI-RS configuration, e.g., how many antenna ports each UE measure the signal. The CSI-RS can be common over the bandwidth partitions. But different UEs receive separate indication according to their capability.

In another example, a UE is configured with another bandwidth partition to measure CSI-RS. A UE can be configured with multiple bandwidth partitions. At any given time, the UE may receive transmission over one bandwidth partition.

A first UE is configured with a first numerology and a first bandwidth partition, and the first UE is configured with a third numerology within the first bandwidth partition for CSI-RS measurement. And a second UE is configured with the third numerology with the second bandwidth partition for CSI-RS measurement, the first bandwidth partition and second bandwidth partition may or may not overlap.

For UL, a first UE is configured with a first numerology and a first bandwidth partition and the first UE is configured with a fourth numerology within the first bandwidth partition for SRS transmission. And a second UE is configured with the fourth numerology with the second bandwidth partition for SRS transmission. Resources assignment for SRS can be TDM and/or FDM with data transmission.

Similar to DL, one UE can support multiple numerologies in UL. One PDCCH can indicate resources assignment for multiple numerology. Alternatively, separate PDCCH indicates resources assignment for each numerology. PDCCH sending UL grant can also include a numerology indication field, in addition to resource allocation field.

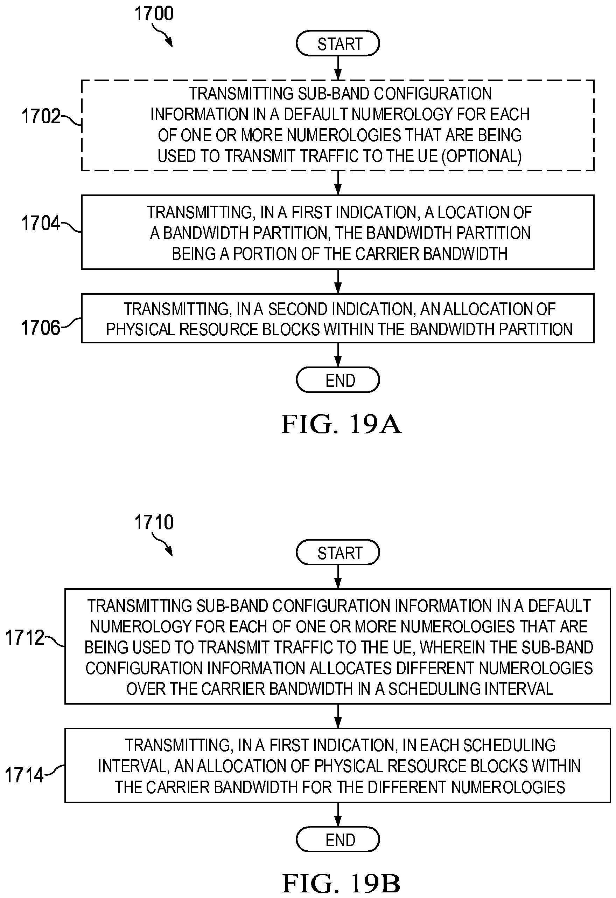

FIG. 19A illustrates an example method 1700 according to the disclosure for allocating resources for a UE in a carrier bandwidth, where the carrier bandwidth is larger than a bandwidth capability of the UE, the method comprising: (step 1704) transmitting, in a first indication, a location of a bandwidth partition, the bandwidth partition being a portion of the carrier bandwidth; and (step 1706) transmitting, in a second indication, an allocation of physical resource blocks within the bandwidth partition.

FIG. 19B illustrates an example method 1710 according to the disclosure for allocating resources for a UE that supports multiple numerologies in a carrier bandwidth, the method comprising: (step 1712) transmitting sub-band configuration information in a default numerology for each of one or more numerologies that are being used to transmit traffic to the UE, wherein the sub-band configuration information allocates resources associated with different numerologies over the carrier bandwidth for a scheduling interval; and (step 1714) transmitting, in a first indication, in each scheduling interval, an allocation of physical resource blocks within the carrier bandwidth for the different numerologies.

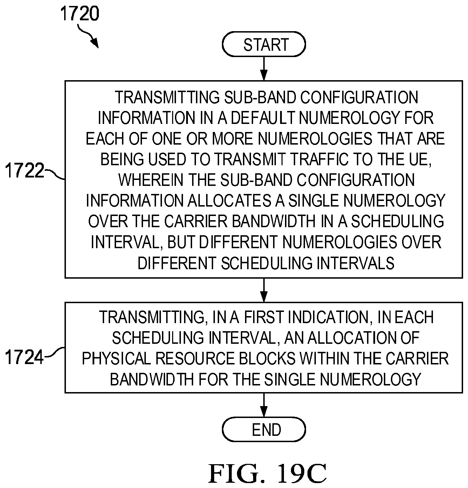

FIG. 19C illustrates an example method 1720 according to the disclosure for allocating resources for a UE that supports multiple numerologies in a carrier bandwidth, the method comprising: (step 1712) transmitting resource configuration information in a default numerology for each of one or more numerologies that are being used to transmit traffic to the UE, wherein the resource configuration information allocates resources associated with a single numerology over the carrier bandwidth for a scheduling interval, but different numerologies over different scheduling intervals; and (step 1724) transmitting, in a first indication, in each scheduling interval, an allocation of physical resource blocks within the carrier bandwidth for the single numerology.

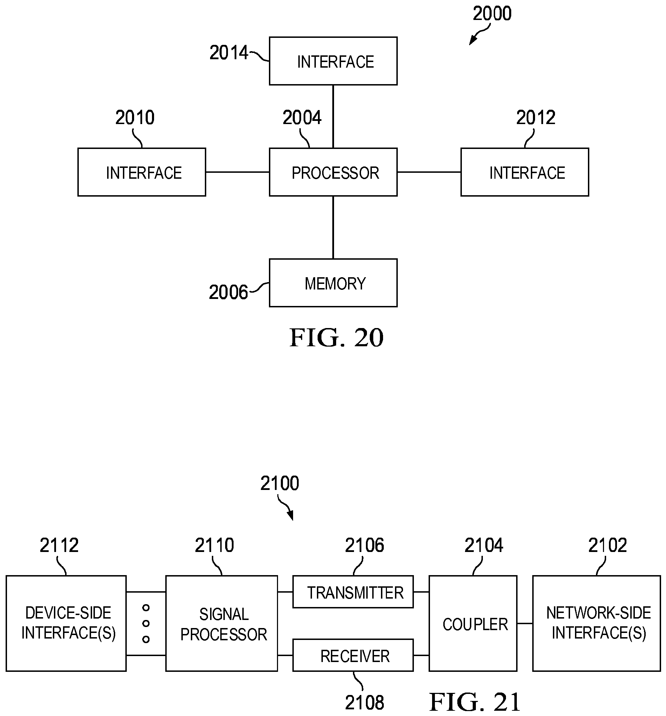

FIG. 20 illustrates a block diagram of an embodiment processing system 2000 for performing methods described herein, which may be installed in a host device. As shown, the processing system 2000 includes a processor 2004, a memory 2006, and interfaces 2010-2014, which may (or may not) be arranged as shown in FIG. 18. The processor 2004 may be any component or collection of components adapted to perform computations and/or other processing related tasks, and the memory 2006 may be any component or collection of components adapted to store programming and/or instructions for execution by the processor 2004. In an embodiment, the memory 2006 includes a non-transitory computer readable medium. The interfaces 2010, 2012, 2014 may be any component or collection of components that allow the processing system 2000 to communicate with other devices/components and/or a user. For example, one or more of the interfaces 2010, 2012, 2014 may be adapted to communicate data, control, or management messages from the processor 2004 to applications installed on the host device and/or a remote device. As another example, one or more of the interfaces 2010, 2012, 2014 may be adapted to allow a user or user device (e.g., personal computer (PC), etc.) to interact/communicate with the processing system 2000. The processing system 2000 may include additional components not depicted in FIG. 20, such as long term storage (e.g., non-volatile memory, etc.).

In some embodiments, the processing system 2000 is included in a network device that is accessing, or part otherwise of, a telecommunications network. In one example, the processing system 2000 is in a network-side device in a wireless or wireline telecommunications network, such as a base station, a relay station, a scheduler, a controller, a gateway, a router, an applications server, or any other device in the telecommunications network. In other embodiments, the processing system 1000 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 2010, 2012, 2014 connects the processing system 2000 to a transceiver adapted to transmit and receive signaling over the telecommunications network.

FIG. 21 illustrates a block diagram of a transceiver 2100 adapted to transmit and receive signaling over a telecommunications network. The transceiver 2100 may be installed in a host device. As shown, the transceiver 2100 comprises a network-side interface 2102, a coupler 2104, a transmitter 2106, a receiver 2108, a signal processor 2110, and a device-side interface 2112. The network-side interface 2102 may include any component or collection of components adapted to transmit or receive signaling over a wireless or wireline telecommunications network. The coupler 2104 may include any component or collection of components adapted to facilitate bi-directional communication over the network-side interface 2102. The transmitter 2106 may include any component or collection of components (e.g., up-converter, power amplifier, etc.) adapted to convert a baseband signal into a modulated carrier signal suitable for transmission over the network-side interface 2102. The receiver 2108 may include any component or collection of components (e.g., down-converter, low noise amplifier, etc.) adapted to convert a carrier signal received over the network-side interface 2102 into a baseband signal. The signal processor 2110 may include any component or collection of components adapted to convert a baseband signal into a data signal suitable for communication over the device-side interface(s) 2112, or vice-versa. The device-side interface(s) 2112 may include any component or collection of components adapted to communicate data-signals between the signal processor 2110 and components within the host device (e.g., the processing system 2000, local area network (LAN) ports, etc.).

The transceiver 2100 may transmit and receive signaling over any type of communications medium. In some embodiments, the transceiver 2100 transmits and receives signaling over a wireless medium. For example, the transceiver 2100 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 2102 comprises one or more antenna/radiating elements. For example, the network-side interface 2102 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 2100 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a signaling unit or a signaling module. Other steps may be performed by an updating unit/module. The respective units/modules may be hardware, software, or a combination thereof. For instance, one or more of the units/modules may be an integrated circuit, such as field programmable gate arrays (FPGAs) or application-specific integrated circuits (ASICs).

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

It should be understood that in some wireless communication systems, a user equipment (UE) wirelessly communicates with one or more base stations (BS). A wireless communication from a UE to a BS is referred to as an uplink communication. A wireless communication from a BS to a UE is referred to as a downlink communication. Resources are required to perform uplink and downlink communications. For example, a BS or a group of BSs may wirelessly transmit data to a UE in a downlink communication at a particular frequency for a particular duration of time. The frequency and time duration are examples of resources.

A BS allocates resources for downlink communications to the UEs served by the BS. The wireless communications may be performed by transmitting orthogonal frequency-division multiplexing (OFDM) symbols.

In New Radio (NR), a next generation of the Long Term Evolution (LTE) communication standard, different types of traffic can be multiplexed over a defined transmission resource. Different types of traffic can have different requirements.

Some UEs served by a BS, or a group of BSs, may need to receive data from the BS with lower latency than other UEs served by the base station. For example, a BS may serve multiple UEs, including a first UE and a second UE. The first UE may be a mobile device carried by a user who is using the first UE to browse on the Internet. The second UE may be equipment on an autonomous vehicle driving on a highway. Although the BS is serving both UEs, the second UE may need to receive data with lower latency compared to the first UE. The second UE may also need to receive its data with higher reliability than the first UE. The second UE may be an ultra-reliable low latency communication (URLLC) UE, whereas the first UE may be an enhanced mobile broadband (eMBB) UE.

In the example above, eMBB traffic and URLLC traffic can have different parameters for transmitting the traffic. The term "numerology" refers to waveform parameterization of the traffic. Parameters that may be included in defining the numerology (NUM) may include, but are not limited to, subcarrier frequency, carrier bandwidth, length of the cyclic prefix, modulation and coding scheme, samples per OFDM symbol and length of OFDM symbol.

According to an aspect of the application there is provided a method of allocating resources for a UE in a carrier bandwidth, where the carrier bandwidth is larger than a bandwidth capability of the UE. In this example, the method comprises transmitting, in a first indication, a location of a bandwidth partition, the bandwidth partition being a portion of the carrier bandwidth; and transmitting, in a second indication, an allocation of physical resource blocks within the bandwidth partition.

Optionally, in such an example, or in any of the previous examples, transmitting the first indication including the location of the bandwidth partition is performed using semi-static signaling.

Optionally, in such an example, or in any of the previous examples, transmitting the first indication including the location of the bandwidth partition is performed using dynamic signaling.

Optionally, in such an example, or in any of the previous examples, the semi-static signaling includes system block information (SIB) or radio resource control (RRC) messaging.

Optionally, in such an example, or in any of the previous examples, the bandwidth partition can be implicitly obtained from a configured control resource set.

Optionally, in such an example, or in any of the previous examples, the dynamic signaling is at least one of: UE-specific Physical Downlink Control Channel (PDCCH); and group-common PDCCH.

Optionally, in such an example, or in any of the previous examples, transmitting the first indication occurs at least one time interval prior to transmitting the second indication.

Optionally, in such an example, or in any of the previous examples, the first indication and the second indication are transmitted in a same UE-specific PDCCH.

Optionally, in such an example, or in any of the previous examples, the method further comprises selecting the bandwidth partition from a set of pre-configured bandwidth partition sizes.

Optionally, in such an example, or in any of the previous examples, the set of pre-configured bandwidth partition sizes is based on the UE bandwidth capability.

Optionally, in such an example, or in any of the previous examples, the set of pre-configured bandwidth partition sizes is based on the bandwidth of a group of physical resource blocks (PRBs).

Optionally, in such an example, or in any of the previous examples, for a UE that supports multiple numerologies, the method further comprises: prior to transmitting the first indication, transmitting sub-band configuration information in a default numerology for each of one or more numerologies that are being used to transmit traffic to the UE.

Optionally, in such an example, or in any of the previous examples, the sub-band configuration information allocates a sub-band resource for a given numerology.

Optionally, in such an example, or in any of the previous examples, the sub-band configuration information allocates different numerologies over the carrier bandwidth in a scheduling interval.

Optionally, in such an example, or in any of the previous examples, the sub-band configuration information allocates a single numerology over the carrier bandwidth, but different numerologies over different scheduling intervals.

Optionally, in such an example, or in any of the previous examples, the sub-band configuration information is transmitted using semi-static signaling.

Optionally, in such an example, or in any of the previous examples, the semi-static signaling includes at least one of: system block information (SIB); group common Physical Downlink Control Channel (PDCCH); or radio resource control (RRC) messaging.

Optionally, in such an example, or in any of the previous examples, transmitting the first and second indications are performed for each sub-band resource associated with a given numerology.

Optionally, in such an example, or in any of the previous examples, the method further comprises transmitting channel state information reference signals (CSI_RS) in partition bandwidths of the scheduling interval bandwidth other than the partition bandwidth in which the resource allocation is made for the UE.

Optionally, in such an example, or in any of the previous examples, the method further comprising dividing the scheduling interval bandwidth into M resource blocks, the partition bandwidth being formed of N resource blocks, where M and N are integers greater than 1, and N < M.

Optionally, in such an example, or in any of the previous examples, the method further comprises multiplexing two or more numerologies over at least two scheduling intervals.

Optionally, in such an example, or in any of the previous examples, the allocated bandwidth partition for the UE has a common part with a second bandwidth partition allocated to another UE.

Optionally, in such an example, or in any of the previous examples, if the UE supports multiple numerology, the control information transmitted with a first numerology can indicate both resource assignment and numerology for data transmission.

Optionally, in such an example, or in any of the previous examples, the method further comprising multiple numerologies used for data transmission within the bandwidth partition.

Optionally, in such an example, or in any of the previous examples, transmission of one transport block may or may not span resources of multiple numerology.

Optionally, in such an example, or in any of the previous examples, the location of the bandwidth partition of the UE with first numerology has a common part with another UE with different bandwidth partition with a second numerology.

Optionally, in such an example, or in any of the previous examples, the common part is dynamically assigned.

Optionally, in such an example, or in any of the previous examples, the common part are used by both UEs in non-orthogonal data transmission.

Optionally, in such an example, or in any of the previous examples, for a UE that supports multiple numerologies, control information transmitted with a first numerology indicates both resource assignment and numerology for data transmission, where transmission of one transport block may or may not span resources of multiple numerology.

According to an aspect of the application there is provided a method of allocating resources for a UE that supports multiple numerologies in a carrier bandwidth. In this example, the method includes: transmitting sub-band configuration information in a default numerology for each of one or more numerologies that are being used to transmit traffic to the UE, where the sub-band configuration information allocates resources associated with different numerologies over the carrier bandwidth for a scheduling interval or more generally a given interval; and transmitting, in a first indication, in each scheduling interval, an allocation of physical resource blocks within the carrier bandwidth for the different numerologies.

According to an aspect of the application there is provided a method of allocating resources for a UE that supports multiple numerologies in a carrier bandwidth. In this example, the method includes: transmitting resource configuration information in a default numerology for each of one or more numerologies that are being used to transmit traffic to the UE, where the resource configuration information allocates resources associated with a single numerology over the carrier bandwidth for a scheduling interval, but different numerologies over different scheduling intervals; and transmitting, in a first indication, in each scheduling interval, an allocation of physical resource blocks within the carrier bandwidth for the single numerology.

According to an aspect of the application there is provided a method of allocating overlapping bandwidth partition to different UEs with different numerologies. In this example, first and second bandwidth partitions can have a common part. The common part can be dynamically assigned to either of the partitions for data transmission.

In accordance with an embodiment, a method for resource allocation is provided. In this example, the method includes receiving, by a UE, DCI in a first BWP in a first time interval, where the DCI includes an indication for a second BWP and includes an allocation of RBs in the second BWP, the second BWP located in a second time interval subsequent to the first time interval, the first BWP and the second BWP being portions of a carrier bandwidth.

In accordance with an embodiment, a method for resource allocation is provided. In this example, the method includes receiving, by a UE, a RRC message in a first BWP in a first time interval, the RRC message including an indication for a second BWP, the second BWP located in a second time interval subsequent to the first time interval, the first BWP and the second BWP being portions of a carrier bandwidth, and receiving DCI in the second BWP, the DCI including an allocation of RBs in the second BWP.

In accordance with an embodiment, a UE is provided. In this example, the UE includes a process and a non-transitory computer readable storage medium storing programming for execution by the processor, the programming including instructions to receive DCI in a first BWP in a first time interval, where the DCI includes an indication for a second BWP and includes an allocation of RBs in the second BWP, the second BWP located in a second time interval subsequent to the first time interval, the first BWP and the second BWP being portions of a carrier bandwidth.

In accordance with an embodiment, a UE is provided. In this example, the UE includes a process and a non-transitory computer readable storage medium storing programming for execution by the processor, the programming including instructions to receive a RRC message in a first BWP in a first time interval, the RRC message including an indication for a second BWP, the second BWP located in a second time interval subsequent to the first time interval, the first BWP and the second BWP being portions of a carrier bandwidth, and receive DCI in the second BWP, the DCI including an allocation of RBs in the second BWP.

In accordance with an embodiment, a method for resource allocation is provided. In this example, the method includes transmitting, by a base station, DCI in a first BWP in a first time interval, where the DCI includes an indication for a second BWP and includes an allocation of RBs in the second BWP, the second BWP located in a second time interval subsequent to the first time interval, the first BWP and the second BWP being portions of a carrier bandwidth.

In accordance with an embodiment, a method for resource allocation is provided. In this example, the method includes transmitting, by a base station, a RRC message in a first BWP in a first time interval, the RRC message including an indication for a second BWP, the second BWP located in a second time interval subsequent to the first time interval, the first BWP and the second BWP being portions of a carrier bandwidth, and transmitting DCI in the second BWP, the DCI including an allocation of RBs in the second BWP.

In accordance with an embodiment, a BS is provided. In this example, the BS includes a process and a non-transitory computer readable storage medium storing programming for execution by the processor, the programming including instructions to transmit DCI in a first BWP in a first time interval, where the DCI includes an indication for a second BWP and includes an allocation of RBs in the second BWP, the second BWP located in a second time interval subsequent to the first time interval, the first BWP and the second BWP being portions of a carrier bandwidth.

In accordance with an embodiment, a BS is provided. In this example, the BS includes a process and a non-transitory computer readable storage medium storing programming for execution by the processor, the programming including instructions to transmit a RRC message in a first BWP in a first time interval, the RRC message including an indication for a second BWP, the second BWP located in a second time interval subsequent to the first time interval, the first BWP and the second BWP being portions of a carrier bandwidth, and transmit DCI in the second BWP, the DCI including an allocation of RBs in the second BWP.

Optionally, in such an example, or in any of the previous examples, the first time interval and the second time interval are in a first scheduling interval.

Optionally, in such an example, or in any of the previous examples, the first time interval and the second time interval are in different scheduling intervals.

Optionally, in such an example, or in any of the previous examples, the second BWP has a larger bandwidth than the first BWP.

Optionally, in such an example, or in any of the previous examples, the indication for the second BWP indicates a location of the second BWP within the carrier bandwidth.

Optionally, in such an example, or in any of the previous examples, the location includes a pre-defined starting position of the second BWP and a pre-defined size of the second BWP, within the carrier bandwidth.

Optionally, in such an example, or in any of the previous examples, the pre-defined starting position and the pre-defined size are based on a granularity of one RB.

Optionally, in such an example, or in any of the previous examples, the UE tunes a radio frequency (RF) bandwidth from a bandwidth of the first BWP to a bandwidth of the second BWP.

## Claims

1. A method for resource allocation, the method comprising:
receiving (510), by a user equipment (UE), a first configuration comprising a plurality of downlink bandwidth partitions (BWPs) and a second configuration comprising a plurality of uplink BWPs;
receiving (520), by the UE, first downlink control information (DCI) in a first BWP of the plurality of downlink BWPs in a first time interval, the first DCI comprising an uplink grant for uplink data transmission over a second BWP of the plurality of uplink BWPs, and comprising an allocation of resource blocks (RBs) in the second BWP; and
transmitting, by the UE, the uplink data over the second BWP in a second time interval subsequent to the first time interval;
further comprising:
receiving, by the UE, second DCI in the first BWP in a third time interval, the second DCI comprising a downlink grant for downlink data transmission over a third BWP of the plurality of downlink BWPs; and
receiving, by the UE, the downlink data over the third BWP in a fourth time interval subsequent to the third time interval, wherein the third time interval and the fourth time interval are in a scheduling interval;
further comprising receiving a radio resource control (RRC) message, wherein the RRC message comprises a location of the second BWP and a location of the third BWP, the location of the second BWP comprising a pre-defined starting position of the second BWP and a pre-defined size of the second BWP within the carrier bandwidth, the location of the third BWP comprising a pre-defined starting position of the third BWP and a pre-defined size of the third BWP within the carrier bandwidth; and
wherein the first BWP and the third BWP use different numerologies, and wherein the numerologies comprises subcarrier frequencies.

2. The method of claim 1, wherein the location of the second BWP is based on a PRB grid of a numerology associated with the second BWP.

3. The method of any one of claims 1 to 2, wherein the pre-defined starting positions and the pre-defined sizes of the second and the third BWPs are based on a granularity of one RB.

4. The method of any one of claims 1 to 3, wherein the second DCI comprises a field identifying the third BWP.

5. The method of any one of claims 1 to 4, wherein the first configuration and the second configuration are separately received.

6. The method of any one of claims 1 to 5, wherein the first DCI comprises a field identifying the second BWP.

7. The method of any one of claims 1 to 6, wherein a size of the first BWP is equal to a bandwidth of a group of RBs of a numerology associated with the first BWP.

8. The method of any one of claims 1 to 7, further comprising receiving a radio resource control (RRC) message prior to receiving the first DCI, the RRC message identifying the second BWP.

9. A user equipment (UE) comprising:
a processor (2004); and
a non-transitory computer readable storage medium (2006) storing programming for execution by the processor, the programming comprising instructions which when executed by the processor, cause the processor to:
receive (510) a first configuration comprising a plurality of downlink bandwidth partitions (BWPs) and a second configuration comprising a plurality of uplink BWPs;
receive (520) first downlink control information (DCI) in a first BWP of the plurality of downlink BWPs in a first time interval, the first DCI comprising an uplink grant for uplink data transmission over a second BWP of the plurality of uplink BWPs, and comprising an allocation of resource blocks (RBs) in the second BWP; and
transmit the uplink data over the second BWP in a second time interval subsequent to the first time interval;
wherein the programming further comprises instructions which when executed by the processor, cause the processor to:
receive second DCI in the first BWP in a third time interval, the second DCI comprising a downlink grant for downlink data transmission over a third BWP of the plurality of downlink BWPs; and
receive the downlink data over the third BWP in a fourth time interval subsequent to the third time interval, wherein the third time interval and the fourth time interval are in a scheduling interval;
wherein the programming further comprises instructions to receive a radio resource control (RRC) message, wherein the RRC message comprises a location of the second BWP and a location of the third BWP, the location of the second BWP comprising a pre-defined starting position of the second BWP and a pre-defined size of the second BWP within the carrier bandwidth, the location of the third BWP comprising a pre-defined starting position of the third BWP and a pre-defined size of the third BWP within the carrier bandwidth; and
wherein the first BWP and the third BWP use different numerologies, and wherein the numerologies comprises subcarrier frequencies.

10. A method for resource allocation, the method comprising:
transmitting (510), by a base station, a first configuration comprising a plurality of downlink bandwidth partitions (BWPs) and a second configuration comprising a plurality of uplink BWPs;
transmitting (520), by the base station, first downlink control information (DCI) in a first BWP of the plurality of downlink BWPs in a first time interval, the first DCI comprising an uplink grant for uplink data transmission over a second BWP of the plurality of uplink BWPs, and comprising an allocation of resource blocks (RBs) in the second BWP; and
receiving, by the base station, the uplink data over the second BWP in a second time interval subsequent to the first time interval;
further comprising:
transmitting, by the base station, second DCI in the first BWP in a third time interval, the second DCI comprising a downlink grant for downlink data transmission over a third BWP of the plurality of downlink BWPs; and
transmitting, by the base station, the downlink data over the third BWP in a fourth time interval subsequent to the third time interval, wherein the third time interval and the fourth time interval are in a scheduling interval;
further comprising transmitting a radio resource control (RRC) message, wherein the RRC message comprises a location of the second BWP and a location of the third BWP, the location of the second BWP comprising a pre-defined starting position of the second BWP and a pre-defined size of the second BWP within the carrier bandwidth, the location of the third BWP comprising a pre-defined starting position of the third BWP and a pre-defined size of the third BWP within the carrier bandwidth; and
wherein the first BWP and the third BWP use different numerologies, and wherein the numerologies comprises subcarrier frequencies.

11. A base station comprising:
a processor (2004); and
a non-transitory computer readable storage medium (2006) storing programming for execution by the processor, the programming comprising instructions to:
transmit (510) a first configuration comprising a plurality of downlink bandwidth partitions (BWPs) and a second configuration comprising a plurality of uplink BWPs;
transmit (520) first downlink control information (DCI) in a first BWP of the plurality of downlink BWPs in a first time interval, the first DCI comprising an uplink grant for uplink data transmission over a second BWP of the plurality of uplink BWPs, and comprising an allocation of resource blocks (RBs) in the second BWP; and
receive the uplink data over the second BWP in a second time interval subsequent to the first time interval;
wherein the programming further comprises instructions to:
transmit second DCI in the first BWP in a third time interval, the second DCI comprising a downlink grant for downlink data transmission over a third BWP of the plurality of downlink BWPs; and
transmit the downlink data over the third BWP in a fourth time interval subsequent to the third time interval, wherein the third time interval and the fourth time interval are in a scheduling interval;
wherein the programming further comprises instructions to transmit a radio resource control (RRC) message, wherein the RRC message comprises a location of the second BWP and a location of the third BWP, the location of the second BWP comprising a pre-defined starting position of the second BWP and a pre-defined size of the second BWP within the carrier bandwidth, the location of the third BWP comprising a pre-defined starting position of the third BWP and a pre-defined size of the third BWP within the carrier bandwidth; and
wherein the first BWP and the third BWP use different numerologies, and wherein the numerologies comprises subcarrier frequencies.

## Patentansprüche

1. Verfahren zur Ressourcenzuweisung, wobei das Verfahren Folgendes umfasst:
Empfangen (510) einer ersten Konfiguration, die eine Vielzahl von Downlink-Bandbreitenpartitionen (Bandwidth Partitions - BWPs) umfasst, und einer zweiten Konfiguration, die eine Vielzahl von Uplink-BWPs umfasst, durch ein Benutzergerät (User Equipment - UE);
Empfangen (520) von ersten Downlink-Steuerinformationen (Downlink Control Information - DCI) in einer ersten BWP der Vielzahl von Downlink-BWPs in einem ersten Zeitintervall durch das UE, wobei die ersten DCI eine Uplink-Gewährung für die Uplink-Datenübertragung über eine zweite BWP der Vielzahl von Uplink-BWPs umfassen und eine Zuweisung von Ressourcenblöcken (RBs) in der zweiten BWP umfassen; und
Übertragen der Uplink-Daten über die zweite BWP in einem zweiten Zeitintervall nach dem ersten Zeitintervall durch das UE;
ferner umfassend:
Empfangen der zweiten DCI in der ersten BWP in einem dritten Zeitintervall durch das UE, wobei die zweiten DCI eine Downlink-Gewährung für die Downlink-Datenübertragung über eine dritte BWP der Vielzahl von Downlink-BWPs umfassen; und
Empfangen der Downlink-Daten über die dritte BWP in einem vierten Zeitintervall nach dem dritten Zeitintervall durch das UE, wobei das dritte Zeitintervall und das vierte Zeitintervall in einem Planungsintervall liegen;
ferner umfassend das Empfangen einer Radio-Resource-Control-Nachricht (RRC-Nachricht), wobei die RRC-Nachricht eine Lage der zweiten BWP und eine Lage der dritten BWP umfasst, wobei die Lage der zweiten BWP eine vordefinierte Anfangsposition der zweiten BWP und eine vordefinierte Größe der zweiten BWP innerhalb der Trägerbandbreite umfasst, wobei die Lage der dritten BWP eine vordefinierte Anfangsposition der dritten BWP und eine vordefinierte Größe der dritten BWP innerhalb der Trägerbandbreite umfasst; und
wobei die erste BWP und die dritte BWP unterschiedliche Numerologien verwenden und wobei die Numerologien Unterträgerfrequenzen umfassen.

2. Verfahren nach Anspruch 1, wobei die Lage der zweiten BWP auf einem PRB-Gitter einer der zweiten BWP zugeordneten Numerologie basiert.

3. Verfahren nach einem der Ansprüche 1 bis 2, wobei die vordefinierten Anfangspositionen und die vordefinierten Größen des zweiten und des dritten BWPs auf einer Granularität eines RB basieren.

4. Verfahren nach einem der Ansprüche 1 bis 3, wobei die zweiten DCI ein Feld umfassen, das die dritte BWP identifiziert.

5. Verfahren nach einem der Ansprüche 1 bis 4, wobei die erste Konfiguration und die zweite Konfiguration separat empfangen werden.

6. Verfahren nach einem der Ansprüche 1 bis 5, wobei die ersten DCI ein Feld umfassen, das die zweite BWP identifiziert.

7. Verfahren nach einem der Ansprüche 1 bis 6, wobei eine Größe der ersten BWP gleich einer Bandbreite einer Gruppe von RBs einer der ersten BWP zugeordneten Numerologie ist.

8. Verfahren nach einem der Ansprüche 1 bis 7, das ferner das Empfangen einer Radio-Resource-Control-Nachricht (RRC-Nachricht) vor dem Empfangen der ersten DCI umfasst, wobei die RRC-Nachricht die zweite BWP identifiziert.

9. Benutzergerät (UE), umfassend:
einen Prozessor (2004); und
ein nichtflüchtiges computerlesbares Speichermedium (2006), auf dem eine Programmierung zur Ausführung durch den Prozessor gespeichert ist, wobei die Programmierung Anweisungen umfasst, die bei ihrer Ausführung durch den Prozessor, den Prozessor zu Folgendem veranlassen:
Empfangen (510) einer ersten Konfiguration, die eine Vielzahl von Downlink-Bandbreitenpartitionen (BWPs) umfasst, und einer zweiten Konfiguration, die eine Vielzahl von Uplink-BWPs umfasst;
Empfangen (520) von ersten Downlink-Steuerinformationen (DCI) in einer ersten BWP der Vielzahl von Downlink-BWPs in einem ersten Zeitintervall, wobei die ersten DCI eine Uplink-Gewährung für die Uplink-Datenübertragung über eine zweite BWP der Vielzahl von Uplink-BWPs umfassen und eine Zuweisung von Ressourcenblöcken (RBs) in der zweiten BWP umfassen; und
Übertragen der Uplink-Daten über die zweite BWP in einem zweiten Zeitintervall nach dem ersten Zeitintervall;
wobei die Programmierung ferner Anweisungen umfasst, die bei ihrer Ausführung durch den Prozessor, den Prozessor zu Folgendem veranlassen:
Empfangen von zweiten DCI in der ersten BWP in einem dritten Zeitintervall, wobei die zweiten DCI eine Downlink-Gewährung für die Downlink-Datenübertragung über eine dritte BWP der Vielzahl von Downlink-BWPs umfassen; und
Empfangen der Downlink-Daten über die dritte BWP in einem vierten Zeitintervall nach dem dritten Zeitintervall, wobei das dritte Zeitintervall und das vierte Zeitintervall in einem Planungsintervall liegen;
wobei die Programmierung ferner Anweisungen zum Empfangen einer Radio-Resource-Control-Nachricht (RRC-Nachricht) umfasst, wobei die RRC-Nachricht eine Lage der zweiten BWP und eine Lage der dritten BWP umfasst, wobei die Lage der zweiten BWP eine vordefinierte Anfangsposition der zweiten BWP und eine vordefinierte Größe der zweiten BWP innerhalb der Trägerbandbreite umfasst, wobei die Lage der dritten BWP eine vordefinierte Anfangsposition der dritten BWP und eine vordefinierte Größe der dritten BWP innerhalb der Trägerbandbreite umfasst; und
wobei die erste BWP und die dritte BWP unterschiedliche Numerologien verwenden und wobei die Numerologien Unterträgerfrequenzen umfassen.

10. Verfahren zur Ressourcenzuweisung, wobei das Verfahren Folgendes umfasst:
Übertragen (510) einer ersten Konfiguration, die eine Vielzahl von Downlink-Bandbreitenpartitionen (BWPs) umfasst, und einer zweiten Konfiguration, die eine Vielzahl von Uplink-BWPs umfasst, durch eine Basisstation;
Übertragen (520) von ersten Downlink-Steuerinformationen (DCI) in einer ersten BWP der Vielzahl von Downlink-BWPs in einem ersten Zeitintervall durch die Basisstation, wobei die ersten DCI eine Uplink-Gewährung für die Uplink-Datenübertragung über eine zweite BWP der Vielzahl von Uplink-BWPs umfassen und eine Zuweisung von Ressourcenblöcken (RBs) in der zweiten BWP umfassen; und
Empfangen der Uplink-Daten über die zweite BWP in einem zweiten Zeitintervall nach dem ersten Zeitintervall durch die Basisstation;
ferner umfassend:
Übertragen von zweiten DCI in der ersten BWP in einem dritten Zeitintervall durch die Basisstation, wobei die zweiten DCI eine Downlink-Gewährung für die Downlink-Datenübertragung über eine dritte BWP der Vielzahl von Downlink-BWPs umfassen; und
Übertragen der Downlink-Daten über die dritte BWP in einem vierten Zeitintervall nach dem dritten Zeitintervall durch die Basisstation, wobei das dritte Zeitintervall und das vierte Zeitintervall in einem Planungsintervall liegen;
ferner umfassend das Übertragen einer Radio-Resource-Control-Nachricht (RRC-Nachricht), wobei die RRC-Nachricht eine Lage der zweiten BWP und eine Lage der dritten BWP umfasst, wobei die Lage der zweiten BWP eine vordefinierte Anfangsposition der zweiten BWP und eine vordefinierte Größe der zweiten BWP innerhalb der Trägerbandbreite umfasst, wobei die Lage der dritten BWP eine vordefinierte Anfangsposition der dritten BWP und eine vordefinierte Größe der dritten BWP innerhalb der Trägerbandbreite umfasst; und
wobei die erste BWP und die dritte BWP unterschiedliche Numerologien verwenden und wobei die Numerologien Unterträgerfrequenzen umfassen.

11. Basisstation, umfassend:
einen Prozessor (2004); und
ein nichtflüchtiges computerlesbares Speichermedium (2006), auf dem eine Programmierung zur Ausführung durch den Prozessor gespeichert ist, wobei die Programmierung Anweisungen zu Folgendem umfasst:
Übertragen (510) einer ersten Konfiguration, die eine Vielzahl von Downlink-Bandbreitenpartitionen (BWPs) umfasst, und einer zweiten Konfiguration, die eine Vielzahl von Uplink-BWPs umfasst;
Übertragen (520) von ersten Downlink-Steuerinformationen (DCI) in einer ersten BWP der Vielzahl von Downlink-BWPs in einem ersten Zeitintervall, wobei die ersten DCI eine Uplink-Gewährung für die Uplink-Datenübertragung über eine zweite BWP der Vielzahl von Uplink-BWPs umfassen und eine Zuweisung von Ressourcenblöcken (RBs) in der zweiten BWP umfassen; und
Empfangen der Uplink-Daten über die zweite BWP in einem zweiten Zeitintervall nach dem ersten Zeitintervall;
wobei die Programmierung ferner Anweisungen zu Folgendem umfasst:
Übertragen der zweiten DCI in der ersten BWP in einem dritten Zeitintervall, wobei die zweiten DCI eine Downlink-Gewährung für die Downlink-Datenübertragung über eine dritte BWP der Vielzahl von Downlink-BWPs umfassen; und
Übertragen der Downlink-Daten über die dritte BWP in einem vierten Zeitintervall nach dem dritten Zeitintervall, wobei das dritte Zeitintervall und das vierte Zeitintervall in einem Planungsintervall liegen;
wobei die Programmierung ferner Anweisungen zum Übertragen einer Radio-Resource-Control-Nachricht (RRC-Nachricht) umfasst, wobei die RRC-Nachricht eine Lage der zweiten BWP und eine Lage der dritten BWP umfasst, wobei die Lage der zweiten BWP eine vordefinierte Anfangsposition der zweiten BWP und eine vordefinierte Größe der zweiten BWP innerhalb der Trägerbandbreite umfasst, wobei die Lage der dritten BWP eine vordefinierte Anfangsposition der dritten BWP und eine vordefinierte Größe der dritten BWP innerhalb der Trägerbandbreite umfasst; und
wobei die erste BWP und die dritte BWP unterschiedliche Numerologien verwenden und wobei die Numerologien Unterträgerfrequenzen umfassen.

## Revendications

1. Procédé d'attribution de ressources, le procédé comprenant :
la réception (510), par un équipement utilisateur (UE), d'une première configuration comprenant une pluralité de partitions de bande passante de liaison descendante (BWP) et d'une seconde configuration comprenant une pluralité de BWP de liaison montante ;
la réception (520), par l'UE, de premières informations de commande de liaison descendante (DCI) dans une première BWP de la pluralité de BWP de liaison descendante dans un premier intervalle de temps, les premières DCI comprenant une autorisation de liaison montante pour une transmission de données de liaison montante sur une deuxième BWP de la pluralité de BWP de liaison montante, et comprenant une attribution de blocs de ressources (RB) dans la deuxième BWP ; et
la transmission, par l'UE, des données de liaison montante sur la deuxième BWP dans un deuxième intervalle de temps consécutif au premier intervalle de temps ;
comprenant en outre :
la réception, par l'UE, de secondes DCI dans la première BWP dans un troisième intervalle de temps, les secondes DCI comprenant une autorisation de liaison descendante pour la transmission de données de liaison descendante sur une troisième BWP de la pluralité de BWP de liaison descendante ; et
la réception, par l'UE, des données de liaison descendante sur la troisième BWP dans un quatrième intervalle de temps consécutif au troisième intervalle de temps, dans lequel le troisième intervalle de temps et le quatrième intervalle de temps sont dans un intervalle de planification ;
comprenant en outre la réception d'un message de commande de ressource radio (RRC), dans lequel le message de RRC comprend un emplacement de la deuxième BWP et un emplacement de la troisième BWP, l'emplacement de la deuxième BWP comprenant une position de départ prédéfinie de la deuxième BWP et une taille prédéfinie de la deuxième BWP à l'intérieur de la bande passante porteuse, l'emplacement de la troisième BWP comprenant une position de départ prédéfinie de la troisième BWP et une taille prédéfinie de la troisième BWP à l'intérieur de la bande passante porteuse ; et
dans lequel la première BWP et la troisième BWP utilisent des numérologies différentes, et dans lequel les numérologies comprennent des fréquences de sous-porteuse.

2. Procédé selon la revendication 1, dans lequel l'emplacement de la deuxième BWP est basé sur un réseau PRB d'une numérologie associée à la deuxième BWP.

3. Procédé selon l'une quelconque des revendications 1 et 2, dans lequel les positions de départ prédéfinies et les tailles prédéfinies des deuxième et troisième BWP sont basées sur une granularité d'un RB.

4. Procédé selon l'une quelconque des revendications 1 à 3, dans lequel les deuxièmes DCI comprennent un champ identifiant la troisième BWP.

5. Procédé selon l'une quelconque des revendications 1 à 4, dans lequel la première configuration et la seconde configuration sont reçues séparément.

6. Procédé selon l'une quelconque des revendications 1 à 5, dans lequel les premières DCI comprennent un champ identifiant la deuxième BWP.

7. Procédé selon l'une quelconque des revendications 1 à 6, dans lequel une taille de la première BWP est égale à une bande passante d'un groupe de RB d'une numérologie associée à la première BWP.

8. Procédé selon l'une quelconque des revendications 1 à 7, comprenant en outre la réception d'un message de commande de ressource radio (RRC) avant la réception des premières DCI, le message RRC identifiant la deuxième BWP.

9. Equipement utilisateur (UE) comprenant :
un processeur (2004) ; et
un support de stockage lisible par ordinateur non transitoire (2006) stockant une programmation pour exécution par le processeur, la programmation comprenant des instructions qui lorsqu'elles sont exécutées par le processeur, amènent le processeur à :
recevoir (510) une première configuration comprenant une pluralité de partitions de bande passante de liaison descendante (BWP) et une seconde configuration comprenant une pluralité de BWP de liaison montante ;
recevoir (520) des premières informations de commande de liaison descendante (DCI) dans une première BWP de la pluralité de BWP de liaison descendante dans un premier intervalle de temps, les premières DCI comprenant une autorisation de liaison montante pour une transmission de données de liaison montante sur une deuxième BWP de la pluralité de BWP de liaison montante, et comprenant une attribution de blocs de ressources (RB) dans la deuxième BWP ; et
transmettre les données de liaison montante sur la deuxième BWP dans un deuxième intervalle de temps consécutif au premier intervalle de temps ;
dans lequel la programmation comprend en outre des instructions qui lorsqu'elles sont exécutées par le processeur, amènent le processeur à :
recevoir des deuxièmes DCI dans la première BWP dans un troisième intervalle de temps, les deuxièmes DCI comprenant une autorisation de liaison descendante pour une transmission de données de liaison descendante sur une troisième BWP de la pluralité de BWP de liaison descendante ; et
recevoir les données de liaison descendante sur la troisième BWP dans un quatrième intervalle de temps consécutif au troisième intervalle de temps, dans lequel le troisième intervalle de temps et le quatrième intervalle de temps sont dans un intervalle de planification ;
dans lequel la programmation comprend en outre des instructions pour recevoir un message de commande de ressource radio (RRC), dans lequel le message de RRC comprend un emplacement de la deuxième BWP et un emplacement de la troisième BWP, l'emplacement de la deuxième BWP comprenant une position de départ prédéfinie de la deuxième BWP et une taille prédéfinie de la deuxième BWP à l'intérieur de la bande passante porteuse, l'emplacement de la troisième BWP comprenant une position de départ prédéfinie de la troisième BWP et une taille prédéfinie de la troisième BWP à l'intérieur de la bande passante porteuse ; et
dans lequel la première BWP et la troisième BWP utilisent des numérologies différentes, et dans lequel les numérologies comprennent des fréquences de sous-porteuse.

10. Procédé d'attribution de ressources, le procédé comprenant :
la transmission (510), par une station de base, d'une première configuration comprenant une pluralité de partitions de bande passante de liaison descendante (BWP) et une seconde configuration comprenant une pluralité de BWP de liaison montante ;
la transmission (520), par la station de base, de premières informations de commande de liaison descendante (DCI) dans une première BWP de la pluralité de BWP de liaison descendante dans un premier intervalle de temps, les premières DCI comprenant une autorisation de liaison montante pour une transmission de données de liaison montante sur une deuxième BWP de la pluralité de BWP de liaison montante, et comprenant une attribution de blocs de ressources (RB) dans la deuxième BWP ; et
la réception, par la station de base, des données de liaison montante sur la deuxième BWP dans un deuxième intervalle de temps consécutif au premier intervalle de temps ;
comprenant en outre :
la transmission, par la station de base, de deuxièmes DCI dans la première BWP dans un troisième intervalle de temps, les deuxièmes DCI comprenant une autorisation de liaison descendante pour la transmission de données de liaison descendante sur une troisième BWP de la pluralité de BWP de liaison descendante ; et
la transmission, par la station de base, des données de liaison descendante sur la troisième BWP dans un quatrième intervalle de temps consécutif au troisième intervalle de temps, dans lequel le troisième intervalle de temps et le quatrième intervalle de temps sont dans un intervalle de planification ;
comprenant en outre la transmission d'un message de commande de ressource radio (RRC), dans lequel le message de RRC comprend un emplacement de la deuxième BWP et un emplacement de la troisième BWP, l'emplacement de la deuxième BWP comprenant une position de départ prédéfinie de la deuxième BWP et une taille prédéfinie de la deuxième BWP à l'intérieur de la bande passante porteuse, l'emplacement de la troisième BWP comprenant une position de départ prédéfinie de la troisième BWP et une taille prédéfinie de la troisième BWP à l'intérieur de la bande passante porteuse ; et
dans lequel la première BWP et la troisième BWP utilisent des numérologies différentes, et dans lequel les numérologies comprennent des fréquences de sous-porteuse.

11. Station de base comprenant :
un processeur (2004) ; et
un support de stockage lisible par ordinateur non transitoire (2006) stockant une programmation pour exécution par le processeur, la programmation comprenant des instructions pour :
transmettre (510) une première configuration comprenant une pluralité de partitions de bande passante (BWP) de liaison descendante et une seconde configuration comprenant une pluralité de BWP de liaison montante ;
transmettre (520) des premières informations de commande de liaison descendante (DCI) dans une première BWP de la pluralité de BWP de liaison descendante dans un premier intervalle de temps, les premières DCI comprenant une autorisation de liaison montante pour une transmission de données de liaison montante sur une deuxième BWP de la pluralité de BWP de liaison montante, et comprenant une attribution de blocs de ressources (RB) dans la deuxième BWP ; et
recevoir des données de liaison montante sur la deuxième BWP dans un deuxième intervalle de temps consécutif au premier intervalle de temps ;
dans laquelle la programmation comprend en outre des instructions pour :
transmettre des secondes DCI dans la première BWP dans un troisième intervalle de temps, les secondes DCI comprenant une autorisation de liaison descendante pour une transmission de données de liaison descendante sur une troisième BWP de la pluralité de BWP de liaison descendante ; et
transmettre les données de liaison descendante sur la troisième BWP dans un quatrième intervalle de temps consécutif au troisième intervalle de temps, dans lequel le troisième intervalle de temps et le quatrième intervalle de temps sont dans un intervalle de planification ;
dans laquelle la programmation comprend en outre des instructions pour transmettre un message de commande de ressource radio (RRC), dans laquelle le message de RRC comprend un emplacement de la deuxième BWP et un emplacement de la troisième BWP, l'emplacement de la deuxième BWP comprenant une position de départ prédéfinie de la deuxième BWP et une taille prédéfinie de la deuxième BWP à l'intérieur de la bande passante porteuse, l'emplacement de la troisième BWP comprenant une position de départ prédéfinie de la troisième BWP et une taille prédéfinie de la troisième BWP à l'intérieur de la bande passante porteuse ; et
dans laquelle la première BWP et la troisième BWP utilisent des numérologies différentes, et dans laquelle les numérologies comprennent des fréquences de sous-porteuse.
